# DEMANDE DE BREVET EUROPEEN

(11) **EP 1 175 122 A1**
(43) Date de publication de la demande: **23.01.2002**
(21) Numéro de dépôt: 01401799.0
(22) Date de dépôt: 05.07.2001
(51) Int. Cl.: H04Q 11/04, H04L 12/56

(54) **Dispositif de gestion de mémoire permettant l'inscription de blocs de données par substitution**

(30) Priorité: 17.07.2000 FR 0009302
(71) Demandeur: ALCATEL, 75008 Paris (FR)
(72) Inventeur: Henrion, Michel, 92100 Boulogne-Billancourt (FR)
(74) Mandataire: Sciaux, Edmond

(57) **Abrégé**

Le dispositif de gestion est associé à une mémoire tampon utilisée pour stocker des blocs de données (BD), chaque BD appartenant à une catégorie donnée. En plus des opérations de réception et de service de ces BD, le dispositif permet de commander éventuellement l'élimination prématurée d'un BD donné ou bien d'un BD appartenant à une catégorie donnée, en libérant son emplacement dans la mémoire tampon tout en préservant temporairement son identité de bloc associée pour éviter un réarrangement des relations temporelles entre blocs.

Des moyens de gestion de marquage de catégorie (GMC) et de gestion de BD candidats à l'élimination (GBDCE) sont prévus pour mémoriser, d'une part, pour chaque BD, à quelle catégorie il appartient, et d'autre part, pour chaque catégorie, la liste des BD candidats à l'élimination appartenant à cette catégorie. Ces derniers moyens (GBDCE) d'une part ajoutent, lors de la réception d'un BD, un nouveau BD à la liste de BD candidats à l'élimination qui correspond à la catégorie de priorité (CAT-BR) de ce nouveau bloc, et d'autre part suppriment un BD de sa liste de BD candidats à l'élimination :
- soit lors du dernier service d'un BD qui n'a pas été déjà éliminé ou bien lors de l'élimination prématurée d'un BD donné,
- soit lors de l'élimination d'un BD qui est candidat à l'élimination dans une catégorie de priorité (CAT-BEP) spécifiée.

## Description

La présente invention concerne un dispositif de gestion de mémoire tampon comportant un ensemble d'emplacements de mémoire, chaque emplacement permettant de mémoriser temporairement un bloc de données (BD) à une adresse respective d'emplacement, ledit dispositif évitant un réarrangement en cas d'élimination prématurée d'un bloc de données mémorisé dans cette mémoire. Le problème dit de réarrangement consécutif à l'élimination prématurée d'un bloc de données, concerne la conséquence de cette élimination, à savoir le besoin de modifier l'arrangement des relations séquentielles entre BD dans le dispositif de gestion. Ce problème est traité dans une demande de brevet antérieure de la demanderesse publiée sous le numéro FR 2.752.632. On considérera que cette demande est incorporée par référence dans son intégralité dans la présente demande.

Plus particulièrement, la présente invention s'adresse au problème plus spécifique de la gestion des emplacements d'une mémoire tampon lorsque les blocs de données mémorisés sont gérés selon n catégories de priorité possibles (où n est supérieur à 1), par exemple de façon hiérarchique selon des catégories qui reflètent le niveau de priorité respectif des différents blocs de données, et lorsque l'on utilise une discipline de contrôle des pertes de blocs de données impliquant une opération d'écriture d'un nouveau bloc de données dans un emplacement déjà occupé par un autre bloc de données. Typiquement, lorsque la mémoire est saturée, ou bien remplie à un niveau proche de la saturation (globalement ou pour une catégorie donnée), une telle opération consiste à écrire un nouveau bloc de données de priorité élevée dans un emplacement de mémoire tampon rendu disponible en éliminant le bloc de données, de priorité généralement moins élevée, qui est mémorisé dans cet emplacement.

Cette opération combinée d'élimination d'un bloc de données mémorisé et d'inscription simultanée d'un autre bloc de données au sein du même emplacement d'une mémoire tampon sera dénommée ci-après "substitution" de bloc de données ; elle est connue par l'expression anglo-saxonne de "push-out".

Les blocs de données susceptibles d'être éliminés sont désignés "blocs de données candidats à l'élimination" (BDCE). Typiquement, il s'agit par exemple des blocs de données des n-1 catégories de priorité inférieures (les blocs de données de la catégorie la plus élevée ne pouvant alors pas être éliminés).

Outre le cas d'élimination d'un bloc de données lors d'une opération de substitution, le cadre de l'invention comprend également deux autres cas possibles d'élimination prématurée (sans substitution) d'un bloc de données (désigné ci après "BD") :
- l'élimination d'un BD candidat pour élimination dans une catégorie i donnée, typiquement le BD qui se trouve être le premier dans une liste utilisée pour gérer le sous-ensemble de BD candidats à l'élimination (BDCE) appartenant à cette catégorie i; et
- l'élimination d'un BD particulier mémorisé dans un emplacement de la mémoire tampon.

Selon la solution proposée dans cette demande de brevet précitée, on associe à chaque BD mémorisé dans la mémoire tampon une identité de BD (IBD) qui peut être distincte de l'adresse de son emplacement dans la mémoire tampon (EMT), et on réalise l'élimination d'un BD d'un emplacement de la mémoire tampon (EMT) sans pour autant nécessiter de réarranger les relations séquentielles entre BD qui sont gérées à l'aide de leurs identités respectives de BD (IBD). En effet, l'élimination d'un BD libère immédiatement l'emplacement de mémoire tampon (EMT) qu'il occupait tout en conservant son identité de bloc de données (IBD) initiale. Un BD éliminé continue donc d'exister par son identité IBD dans le dispositif de gestion, par exemple dans une liste chaînée, mais on associe à cet identité IBD un indicateur de BD éliminé qui sera ensuite détecté lors du service de ce BD.

Ainsi, la situation envisagée dans la demande de brevet précitée est celle de l'élimination prématurée d'un BD donné mémorisé dans une mémoire tampon, cette élimination étant effectuée comme une opération isolée. Une telle élimination d'un BD peut être nécessitée par diverses causes : création anticipée de nouveaux emplacements libres pour des BD éventuels de haute priorité (typiquement en cas de saturation imminente de la mémoire tampon), élimination d'un BD incorrect, etc.

De manière générale, selon le dispositif de gestion de mémoire tampon décrit dans la demande de brevet précitée, lors de l'élimination d'un BD, l'emplacement de mémoire (EMT) qu'il occupe est immédiatement relâché afin qu'il devienne disponible, mais l'identité IBD associée au BD ainsi éliminé est préservée, de sorte que l'arrangement des relations séquentielles entre BD (référencées par leur identité IBD) n'est pas modifié de façon prématurée dans le dispositif de gestion.

Pour réaliser cet effet technique, le dispositif de gestion selon la demande de brevet précitée comporte :
- des moyens de gestion des adresses d'emplacements libres dans la mémoire tampon, pour rechercher un emplacement libre lors de la réception d'un nouveau bloc de données reçu à mémoriser dans cette mémoire tampon, et pour libérer l'adresse d'un emplacement lorsqu'il n'est plus occupé par un bloc de données ;
- des moyens de commande d'écriture, pour effectuer l'écriture d'un nouveau bloc de données dans un emplacement la mémoire tampon;
- des moyens de gestion des identités libres de blocs, pour attribuer une identité libre de blocs à chaque nouveau bloc de données mémorisé dans cette mémoire tampon;
- des moyens de gestion d'association d'emplacement relative à une identité de bloc, pour mémoriser, pour chaque identité associée à un bloc de données, l'adresse de l'emplacement qu'il occupe dans la mémoire tampon;
- et des moyens de gestion temporelle des blocs de données mémorisés dans la mémoire tampon, pour :
   - commander la réception d'un nouveau bloc de données à mémoriser dans la mémoire tampon;
   - arranger, selon une discipline de service donnée, les identités des blocs de données mémorisés dans la mémoire tampon, cet arrangement consistant à gérer, en fonction de paramètres temporels associés aux identités de ces blocs, leurs attentes respectives dans la mémoire tampon et déterminer ainsi leurs service à des instants de lecture respectifs, chaque bloc de données devant être normalement lu un nombre prédéterminé de fois avant de libérer son emplacement dans la mémoire tampon ainsi que son identité de bloc associée;
   - commander le service d'un bloc de données à lire dans la mémoire tampon;
   - et commander éventuellement l'élimination prématurée d'un bloc de données mémorisé prédéterminé, en libérant son emplacement dans la mémoire tampon tout en préservant temporairement son identité de bloc associée pour éviter un réarrangement des relations temporelles entre blocs.

Pour permettre l'élimination prématurée d'un bloc de données mémorisé dans un emplacement de la mémoire tampon, et le relâchement immédiat de cet emplacement, sans avoir à réarranger les identités de blocs gérés par les moyens de gestion temporelle, le dispositif de gestion comporte en outre :
- des moyens de gestion d'indicateur d'élimination, pour mémoriser, pour chaque identité de bloc de données, un indicateur d'élimination indiquant le fait que le bloc correspondant a été éliminé prématurément ou non;
- des moyens pour commander aux moyens de gestion des adresses d'emplacement libre, une libération de l'adresse de l'emplacement mémorisant un bloc à éliminer ;
- des moyens pour écrire dans la mémoire de gestion d'indicateurs d'élimination, chaque fois qu'un bloc a été éliminé, une valeur d'indicateur mémorisant l'élimination de ce bloc ;
- des moyens pour lire dans la mémoire de gestion d'indicateurs d'élimination, lors de chaque sélection d'une identité de bloc en vue de lire ce bloc dans la mémoire tampon, et pour autoriser la lecture dans l'emplacement de la mémoire tampon correspondant à l'identité de bloc sélectionnée, seulement si l'indicateur d'élimination lu indique que le bloc ayant cette identité de bloc n'a pas déjà été éliminé ; et
- des moyens pour autoriser les moyens de gestion des adresses d'emplacement libre à libérer l'adresse de l'emplacement correspondant à un bloc lu, après un nombre prédéterminé de lectures de ce bloc, tant que des lectures sont autorisées, si ce bloc n'a pas été déjà éliminé.

Avec ce dispositif de gestion, il est possible de relâcher au plus tôt un emplacement de la mémoire tampon puisque les moyens de gestion temporelle comportent des moyens pour commander aux moyens de gestion des adresses d'emplacement libre une libération prématurée de l'adresse de l'emplacement mémorisant le bloc à éliminer, dès que la décision d'éliminer ce bloc est prise. Les moyens de gestion temporelle ne font cependant aucun réarrangement des paramètres temporels lors de l'élimination d'un bloc de données. Ils sélectionnent donc normalement les identités des blocs éliminés sans les distinguer de celles des autres blocs de données. Pour savoir si une identité de bloc désigne bien un bloc qui est encore effectivement mémorisé, il est prévu des moyens pour lire dans la mémoire tampon des indicateurs d'élimination. Ce dispositif ne nécessite aucune augmentation de la capacité de la mémoire tampon.

On peut donc considérer que la demande de brevet précitée fonde les moyens d'une technique efficace d'élimination d'un BD donné mémorisé dans la mémoire tampon, tout en évitant de réarranger les relations séquentielles entre BD (référencées par leur identité IBD) dans le dispositif de gestion.

La présente invention a pour objet de développer le dispositif de gestion de mémoire tampon de la demande de brevet précitée afin de préserver ces mêmes avantages dans le contexte particulier où chaque BD appartient à une catégorie, reflétant par exemple un niveau de priorité hiérarchique, et où on peut effectuer l'élimination d'un BD candidat pour élimination dans une catégorie de priorité donnée (par opposition à l'élimination d'un BD donné), une telle opération d'élimination pouvant être exécutée de façon combinée avec l'inscription simultanée d'un autre BD au sein du même emplacement libéré dans la mémoire tampon (opération de substitution de BD). En outre, une telle opération d'élimination (d'un BD candidat pour élimination dans une catégorie de priorité donnée) peut être également exécutée de façon isolée.

On considérera une opération de substitution de BD dans un contexte général, indépendant de l'algorithme utilisé pour décider quand et dans quelle catégorie une telle opération d'élimination est requise, donc par exemple selon une discipline de perte de bloc quelconque, avec comme seule hypothèse que la substitution peut être requise lors de la réception d'un nouveau bloc à inscrire dans la mémoire tampon. En d'autres termes, un nouveau bloc reçu est inscrit :
- soit normalement (sans substitution) dans un emplacement libre de la mémoire tampon,
- soit par substitution, dans l'emplacement de la mémoire tampon occupé auparavant par le BD éliminé dans cette opération de substitution.

Une opération de substitution est typiquement effectuée en cas de congestion de la mémoire tampon, c'est-à-dire lorsqu'il est nécessaire d'inscrire un nouveau BD de priorité élevée alors qu'aucun emplacement n'est disponible dans la mémoire tampon (globalement ou bien dans la fraction de mémoire tampon allouée pour la catégorie de priorité du nouveau BD reçu). Cependant, certaines disciplines de contrôle de pertes de BD prévoient également d'effectuer des opérations de substitution anticipées même si la mémoire tampon n'est pas encore complètement occupée.

La réception d'un BD avec substitution nécessite donc d'exécuter de façon combinée, et aussi rapidement qu'une réception normale :
- d'une part, une opération d'élimination de BD consécutive à la sélection préalable d'un BD candidat pour élimination dans la catégorie de priorité requise (typiquement correspondant à un niveau de priorité inférieur à celui du nouveau BD reçu); et
- d'autre part, une opération d'écriture du nouveau BD reçu dans l'emplacement de mémoire tampon libéré par cette élimination (par opposition à un emplacement libre dans le cas d'une réception de BD normale sans substitution).

Dans un tel contexte, le dispositif de gestion de la mémoire tampon selon l'invention implique de gérer, pour chaque catégorie (sauf la plus élevée dans certains cas d'application), les BD mémorisés qui appartiennent à la catégorie correspondante, et qui sont donc les BD candidats pour élimination, sachant qu'un bloc ne peut appartenir qu'à une seule catégorie dans la mémoire tampon.

On considérera une opération de substitution générale en ce qui concerne la gestion des blocs candidats pour élimination. Dans les applications de gestion de priorité les plus simples, on distingue seulement deux catégories de priorité de BD (haute et basse priorité), et on prévoit seulement l'élimination possible de BD de basse priorité, auquel cas il suffit de gérer une seule catégorie de BD candidats pour élimination, à savoir ceux de basse priorité. Cependant, on suppose ici le cas général d'une pluralité de catégories de priorité (n supérieur ou égal à 2), auquel cas le dispositif de gestion est capable de gérer plusieurs (C) sous-ensembles de BD candidats pour élimination typiquement relatifs à C = n-1 catégories de priorité (dans la plupart des disciplines de pertes utilisées, les BD de plus haute priorité ne peuvent être éliminés par une opération de substitution) ; cependant le cas C = n est également possible.

Parmi les n catégories de priorité possibles, on désignera par les indices i et j les deux catégories généralement concernées dans une opération de substitution.

Ainsi, lors d'une opération de substitution, la discipline de contrôle de pertes de BD (qui est elle-même hors du cadre de l'invention) détermine la catégorie de priorité i requise (parmi les C sous-ensembles de BD candidats pour élimination) pour effectuer l'élimination. Le dispositif de gestion est alors informé de cette catégorie i dans laquelle il doit sélectionner un BD candidat pour élimination, désigné ci-après BDCE, ainsi que de la catégorie de priorité j du nouveau BD reçu.

Pour illustrer la gestion des BDCE lors d'une opération de substitution dans le dispositif de gestion selon l'invention, on peut remarquer que ce dernier:
- d'une part élimine, sur instruction de la discipline de BD des moyens de gestion temporelle, un BDCE dans la catégorie requise i,
- et d'autre part prend en charge le nouveau BD reçu appartenant à la catégorie de priorité j, ce nouveau BD pouvant appartenir à la catégorie de priorité la plus élevée, ou bien à une autre catégorie de priorité, auquel cas ce nouveau BD reçu constitue un nouveau BDCE qui doit être ajouté au sous-ensemble des BDCE de la catégorie j.

Dans la fonction de gestion de BDCE par catégorie, lors d'une réception de BD avec substitution, il y a donc lieu:
- d'une part, de supprimer le BDCE sélectionné pour élimination dans la catégorie i, et
- d'autre part, d'ajouter éventuellement le nouveau BD reçu comme BDCE dans la catégorie j (typiquement si son niveau de priorité j n'est pas le plus élevé).

Classiquement, j≠i quand un BD de plus haute priorité remplace un bloc de plus basse priorité. Cependant, le cas j=i n'est pas exclu dans certaines disciplines de pertes de BD plus sophistiquées.

Afin de réaliser la gestion de ces différents cas précités, l'invention propose un dispositif de gestion d'une mémoire tampon, chaque emplacement de cette mémoire étant susceptible de mémoriser un bloc de données à une adresse d'emplacement, et une référence dite d'identité de bloc de données étant associée à chaque bloc traité par le dispositif, ce dernier comportant:
- des moyens de gestion temporelle des blocs de données mémorisés dans la mémoire tampon, pour:
   commander la réception d'un nouveau bloc de données à mémoriser dans la mémoire tampon;
   arranger, selon une discipline de service donnée, les identités des blocs de données mémorisés dans la mémoire tampon, cet arrangement consistant à gérer, en fonction de paramètres temporels associés aux identités de ces blocs, leurs attentes respectives dans la mémoire tampon et déterminer ainsi leurs service à des instants de lecture respectifs, chaque bloc de données devant être normalement lu un nombre prédéterminé de fois avant de libérer son emplacement dans la mémoire tampon ainsi que son identité de bloc associée;
   commander le service d'un bloc de données à lire dans la mémoire tampon;
   et commander éventuellement l'élimination prématurée d'un bloc de données mémorisé prédéterminé, en libérant son emplacement dans la mémoire tampon tout en préservant temporairement son identité de bloc associée pour éviter un réarrangement des relations temporelles entre blocs;
- des moyens de gestion des adresses d'emplacement libre dans la mémoire tampon, pour rechercher une adresse d'emplacement libre lors de la réception d'un nouveau bloc de données à mémoriser dans cette mémoire tampon, et pour libérer l'adresse d'un emplacement lorsqu'il n'est plus occupé par un bloc de données ;
- des moyens de gestion des identités libres de bloc de données, pour attribuer une identité libre de bloc à chaque nouveau bloc de données mémorisé dans la mémoire tampon, et pour libérer l'identité associée à un bloc de données lorsqu'elle n'est plus utilisée pour ce bloc;
- des moyens de commande d'écriture, pour effectuer l'écriture d'un nouveau bloc de données dans un emplacement de la mémoire tampon;
- des moyens de commande de lecture, pour effectuer une lecture dans la mémoire tampon, lors du service d'un bloc de données;
- des moyens de gestion d'association d'emplacement relative à une identité de bloc, pour mémoriser, pour chaque identité associée à un bloc de données, l'adresse de l'emplacement qu'il occupe dans la mémoire tampon;
- et des moyens de gestion d'indicateur d'élimination, pour mémoriser, pour chaque identité de bloc de données, un indicateur d'élimination indiquant le fait que le bloc correspondant a été éliminé prématurément ou non; l'indicateur d'élimination relatif à un bloc de données étant marqué lors de l'élimination prématurée de ce bloc; et la présence ou l'absence de l'indicateur d'élimination relatif à un bloc de données étant détectée lors du service de ce bloc en vue de sa lecture dans la mémoire tampon, la lecture de ce bloc étant autorisée seulement si l'indicateur d'élimination correspondant à cette identité de bloc indique que ce bloc n'a pas été déjà éliminé, et la libération de l'adresse de l'emplacement correspondant à ce bloc, après un nombre prédéterminé de lectures de ce bloc, étant autorisée seulement si ce bloc n'a pas été déjà éliminé;
caractérisé:
- en ce que les blocs de données mémorisés sont gérés selon plusieurs catégories, chaque bloc appartenant à une catégorie donnée;
- en ce que ledit dispositif comporte en outre:
   -- des moyens de gestion de marquage de catégorie, pour mémoriser l'appartenance de chaque bloc de données à une catégorie ; et
   -- des moyens de gestion de blocs candidats à l'élimination, pour mémoriser, pour chaque catégorie, la liste des blocs de données candidats à l'élimination appartenant à cette catégorie ;
- et en ce que, pour permettre d'effectuer en outre l'élimination d'un bloc de données qui est candidat à l'élimination parmi tous les blocs de données appartenant à une catégorie spécifiée:
   -- les moyens de gestion de marquage de catégorie effectuent d'une part le marquage de la catégorie d'un bloc de données lors de la réception d'un nouveau bloc de données, et d'autre part la lecture pour identification de la catégorie d'un bloc de données lors du dernier service d'un bloc de données qui n'a pas été déjà éliminé, ou bien lors de l'élimination prématurée d'un bloc de données prédéterminé;
   -- et lesdits moyens de gestion de blocs candidats à l'élimination d'une part ajoutent, lors de la réception d'un bloc de données, un nouveau bloc de données à la liste de blocs de données candidats à l'élimination qui correspond à la catégorie de priorité de ce nouveau bloc, et d'autre part suppriment un bloc de données de sa liste de blocs de données candidats à l'élimination :
      soit lors du dernier service d'un bloc de données qui n'a pas été déjà éliminé ou bien lors de l'élimination prématurée d'un bloc de données prédéterminé, auxquels cas ce bloc est connu et sa liste correspond à la catégorie identifiée pour ce bloc par lesdits moyens de gestion de marquage de catégorie;
      soit lors de l'élimination d'un bloc de données qui est candidat à l'élimination dans une catégorie de priorité spécifiée, auquel cas les moyens de gestion de blocs candidats à l'élimination sélectionnent l'un des blocs de la liste correspondant à cette catégorie et indiquent alors, aux moyens de gestion d'indicateur d'élimination, quel bloc a été sélectionné pour qu'ils marquent l'indicateur d'élimination mémorisant l'élimination de ce bloc.

Le dispositif permet de gérer les blocs de données candidats pour élimination soit par leur identité de blocs de données (IBD) soit par leur emplacement dans la mémoire tampon (EMT).

Dans le premier cas de mise en oeuvre du dispositif de gestion de mémoire tampon, il peut être prévu que :
- les moyens de gestion de blocs de données candidats à l'élimination et les moyens de gestion de marquage de catégorie adressent ces blocs de données par leur identité de blocs de données (IBD) ;
- et que, lors de l'élimination d'un bloc de données qui est candidat à l'élimination dans une catégorie de priorité spécifiée, les moyens de gestion de blocs de données candidats pour élimination transmettent l'identité du bloc de données sélectionné pour élimination :

d'une part aux moyens de gestion d'association d'emplacement relatif à une identité de bloc, ces moyens déterminant alors l'adresse d'emplacement correspondante occupé par ce bloc de données sélectionné pour l'élimination ;
et d'autre part directement en tant qu'adresse de la mémoire des moyens de gestion d'indicateur d'élimination pour qu'ils marquent l'indicateur d'élimination mémorisant l'élimination de ce bloc.

Dans le deuxième cas, où les BD candidats pour élimination sont gérés par leur emplacement dans la mémoire tampon (EMT), il peut être prévu que :
- les moyens de gestion de blocs de données candidats à l'élimination et les moyens de gestion de marquage de catégorie adressent ces blocs de données par leur adresse d'emplacement dans la mémoire tampon ;
- le dispositif comporte en outre des moyens additionnels de gestion d'association d'identité relative à un emplacement de bloc, pour mémoriser, pour chaque adresse d'emplacement (EMT) occupé par un bloc de données dans la mémoire tampon, l'identité (IBD) associée à ce bloc, l'identité libre, sélectionnée lors de la réception d'un nouveau bloc de données et attribuée à ce bloc, étant mémorisée à l'adresse correspondant à celle de l'emplacement qu'il occupe dans la mémoire tampon ;
- et que, lors de l'élimination d'un bloc de données qui est candidat à l'élimination dans une catégorie de priorité spécifiée, les moyens de gestion de blocs de données candidats pour élimination transmettent l'adresse d'emplacement du bloc de données sélectionné pour élimination aux moyens additionnels de gestion d'association d'identité relative à un emplacement de bloc, ces moyens additionnels déterminant alors l'identité correspondante du bloc de données sélectionné pour l'élimination, et fournissant alors cette identité de bloc de données en tant qu'adresse de la mémoire des moyens de gestion d'indicateur d'élimination pour qu'ils marquent l'indicateur d'élimination mémorisant l'élimination de ce bloc.

Dans le cas d'une gestion des BD candidats pour élimination par leur identité IBD, il peut être prévu que, pour exécuter de façon isolée l'élimination d'un bloc de données candidat pour élimination appartenant à une catégorie de blocs de données spécifiée, l'adresse d'emplacement occupé par le bloc de données sélectionné pour l'élimination, déterminée par les moyens de gestion d'association d'emplacement relatif à une identité de bloc, est fournie aux moyens de gestion des adresses d'emplacement libre dans la mémoire tampon, pour qu'ils libèrent l'emplacement occupé par ce bloc dans la mémoire tampon.

Dans le cas d'une gestion des BD candidats pour élimination par leur emplacement EMT, il peut être prévu que, pour exécuter de façon isolée l'élimination d'un bloc de données candidat pour élimination appartenant à une catégorie de blocs de données spécifiée, l'adresse d'emplacement occupé par le bloc de données sélectionné pour l'élimination, par les moyens de gestion de blocs de données candidats pour élimination, est également fournie directement aux moyens de gestion des adresses d'emplacement libre dans la mémoire tampon, pour qu'ils libèrent l'emplacement occupé par ce bloc dans la mémoire tampon.

Dans une mise en oeuvre pour exécuter une réception de nouveau bloc de données avec substitution de bloc de données, la réception d'un bloc de données avec substitution consistant, pour pouvoir mémoriser le nouveau bloc de données reçu, à éliminer immédiatement un bloc de données candidat pour élimination appartenant à une catégorie de blocs de données spécifiée, il peut être prévu que :
- l'adresse d'emplacement de la mémoire tampon du bloc de données éliminé est utilisée dans ce cas comme adresse d'emplacement libre pour mémoriser le nouveau bloc de données reçu dans la mémoire tampon, cette adresse étant fournie :
   aux moyens de commande d'écriture, pour qu'ils effectuent l'écriture du nouveau bloc de données à cette adresse d'emplacement ;
   et aux moyens de gestion d'association d'emplacement relatif à une identité de bloc, afin qu'ils mémorisent, pour l'identité de bloc attribuée à ce nouveau bloc de données, l'adresse de l'emplacement utilisée pour mémoriser le bloc de données reçu;
- les moyens de gestion des identités libres de bloc de données attribuent une identité de bloc au nouveau bloc de données reçu, et fournissent cette identité :
   aux moyens de gestion temporelle des blocs de données mémorisés dans la mémoire tampon;
   aux moyens de gestion d'association d'emplacement relatif à une identité de bloc, afin qu'ils mémorisent, pour l'identité de bloc attribuée à ce nouveau bloc de données, l'adresse de l'emplacement utilisée pour mémoriser le bloc de données reçu;
   et aux moyens de gestion d'indicateur d'élimination pour qu'ils initialisent l'indicateur d'élimination du nouveau bloc reçu dans l'état non éliminé;
- les moyens de gestion de marquage de catégorie effectuent le marquage de la catégorie du nouveau bloc de données reçu;
- et les moyens de gestion de blocs de données candidats à l'élimination ajoutent ce nouveau bloc de données à la liste de blocs de données candidats à l'élimination qui correspond à la catégorie de priorité du nouveau bloc de données reçu.

Dans ce dernier cas, et lorsque les blocs de données candidats pour élimination sont gérés par leur identité IBD, il peut être prévu que :
- les moyens de gestion des identités libres de bloc de données fournissent également l'identité attribuée au bloc de données reçu:
   aux moyens de gestion de marquage de catégorie pour qu'ils marquent la catégorie du nouveau bloc de données reçu ;
   et aux moyens de gestion de blocs de données candidats à l'élimination pour qu'ils ajoutent ce nouveau bloc de données à la liste de blocs de données candidats à l'élimination qui correspond à la catégorie de priorité du nouveau bloc de données reçu ;
- et l'adresse d'emplacement utilisée pour mémoriser le nouveau bloc reçu est déterminée par les moyens de gestion d'association d'emplacement relatif à une identité de bloc, à partir de l'identité du bloc éliminé fournie par les moyens de gestion de blocs de données candidats à l'élimination.

Encore dans le cas où on exécute la réception de nouveau bloc de données avec substitution, et où les blocs de données candidats pour élimination sont gérés par leur emplacement en mémoire tampon EMT, il peut être prévu que:
- les moyens de gestion des identités libres de bloc de données fournissent également l'identité, attribuée au bloc de données reçu, aux moyens additionnels de gestion d'association d'identité relative à un emplacement de bloc, pour qu'ils mémorisent, pour l'emplacement de mémoire tampon où est inscrit ce nouveau bloc reçu, son identité associée;
- et l'adresse d'emplacement utilisée pour mémoriser le nouveau bloc reçu est sélectionnée par les moyens de gestion de blocs de données candidats à l'élimination.

Selon un mode de réalisation avantageux de l'invention, les moyens de gestion des identités libres de bloc de données et les moyens de gestion d'association d'emplacement relatif à une identité de bloc utilisent une mémoire commune comportant une ligne de mémoire par identité de bloc de données possible, chaque ligne de mémoire commune étant utilisée de façon exclusive par l'un ou l'autre de ces deux types de moyens de gestion, et contenant:
- soit l'identité de bloc (IBD) suivante dans la liste chaînée d'identités de bloc libres, lorsque l'identité de bloc correspondant à cette ligne de mémoire commune est libre et gérée par les moyens de gestion des identités libres de bloc de données;
- soit l'adresse de l'emplacement (EMT) de la mémoire tampon où est mémorisé un bloc de données ayant une identité de bloc associée correspondant à cette ligne de mémoire commune, lorsque cette identité est utilisée et gérée par les moyens de gestion d'association d'emplacement relatif à une identité de bloc.

Dans le cas d'une gestion des blocs de données candidats pour élimination par leur emplacement en mémoire tampon EMT, il peut être avantageusement prévu que les moyens de gestion des adresses d'emplacement libre dans la mémoire tampon et les moyens additionnels de gestion d'association d'identité relative à un emplacement de bloc utilisent une mémoire commune comportant une ligne de mémoire par adresse d'emplacement possible dans la mémoire tampon, chaque ligne de mémoire commune étant utilisée de façon exclusive par l'un ou l'autre de ces deux types de moyens de gestion, et contenant:
- soit l'adresse d'emplacement suivante dans la liste chaînée d'emplacements de mémoire libres, lorsque l'emplacement correspondant à cette ligne de mémoire commune est libre et géré par les moyens de gestion des adresses d'emplacement libre dans la mémoire tampon;
- soit l'identité de bloc (IBD) associée à un bloc de données mémorisé dans la mémoire tampon à l'adresse d'emplacement (EMT) correspondant à cette ligne de mémoire commune, lorsque cet emplacement est occupé et géré par les moyens additionnels de gestion d'association d'identité relative à un emplacement de bloc.

Dans le cadre général de l'invention, il est possible de mettre en oeuvre la technique des listes chaînées pour effectuer la gestion des différents sous-ensembles de blocs de données dans le dispositif.

Ainsi, on peut prévoir que les moyens de gestion de blocs de données candidats à l'élimination gèrent les différents sous-ensembles de blocs de données candidats à l'élimination à l'aide d'une liste chaînée par catégorie, et que ces moyens utilisent une mémoire commune comportant une ligne de mémoire par référence de bloc de données possible, chaque ligné de cette mémoire commune étant utilisée de façon exclusive par au plus une seule de ces listes par catégorie, et contenant la référence du bloc suivant, s'il existe, et la référence du bloc précédent, s'il existe, dans la liste chaînée de blocs candidats à l'élimination correspondant à cette catégorie.

Dans le cas précédent, et lorsque les blocs de données candidats pour élimination sont gérés par leur identité de bloc de donnée, ces références de bloc de données utilisées pour adresser la mémoire commune précité peuvent être des identités de bloc de données.

De même, lorsque les blocs de données candidats pour élimination sont gérés par leur emplacement en mémoire tampon, les références de bloc de données utilisées pour adresser cette mémoire commune peuvent être des adresses d'emplacements de mémoire tampon.

Dans le cadre général de l'invention, on peut prévoir que, lors de l'élimination d'un bloc de données qui est candidat à l'élimination dans une catégorie spécifiée, les moyens de gestion de blocs candidats à l'élimination sélectionnent le premier bloc de données de la liste de blocs candidats à l'élimination correspondant à cette catégorie spécifiée.

L'invention sera mieux comprise et d'autres caractéristiques apparaîtront plus clairement à l'aide de la description ci-dessous et des figures annexées dans lesquelles :
- la figure 1 est un schéma d'ensemble des différentes unités qui font partie du système de gestion conforme à la présente invention ;
- la figure 2 représente les échanges d'informations entre les unités du système lors d'une réception de bloc de données (BD) sans substitution (pushout) ;
- la figure 3 représente schématiquement une opération de sélection d'un emplacement de mémoire tampon (EMT) libre dans l'unité GEL de la figure 1 ;
- la figure 4 représente schématiquement une opération de sélection d'une identité de BD (IBD) libre dans l'unité GIL de la figure 1 ;
- la figure 5 représente schématiquement une opération de mémorisation, dans l'unité GAEI de la figure 1, de l'identité IBD associée à un EMT occupé;
- la figure 6 représente schématiquement une opération de mémorisation, dans l'unité GAIE de la figure 1, de l'adresse d'emplacement EMT correspondant à une identité IBD occupée ;
- la figure 7 représente schématiquement, dans l'ensemble GBDPC de la figure 1 lors de la réception normale d'un BD, d'une part, une opération de mémorisation, dans l'unité GMC, de la catégorie de ce BD, et d'autre part, dans l'unité GBDCE, une opération d'addition de l'emplacement EMT ce BD, s'il est candidat à l'élimination (BDCE), dans la liste chaînée appropriée de BDCE ;
- la figure 8 représente schématiquement une opération, de marquage, lors de la réception d'un nouveau BD, dans l'unité GIE de la figure 1, d'un indicateur d'élimination dans l'état initial de BD non éliminé ;
- la figure 9 représente les échanges d'informations entre les unités du système lors d'un service de BD qui n'est pas son dernier service ;
- la figure 10 représente schématiquement une opération d'identification, dans l'unité GAIE de la figure 1, de l'emplacement EMT correspondant à une identité IBD donnée ;
- la figure 11 représente schématiquement une opération d'identification, dans l'unité GIE, de l'indicateur d'élimination d'un BD désigné par son identité IBD, et du traitement logique de l'indicateur identifié ;
- la figure 12 représente les échanges d'informations entre les unités du système lors d'un dernier service de BD ;
- la figure 13 représente schématiquement une opération d'enregistrement, en tant qu'IBD libre dans l'unité GIL, d'une identité IBD venant d'être libérée ;
- la figure 14 représente schématiquement une opération d'enregistrement, en tant qu'EMT libre dans l'unité GEL, d'un emplacement EMT venant d'être libéré ;
- la figure 15 représente schématiquement une opération, lors du relâchement ou de l'élimination d'un BD donné, de suppression de l'adresse d'emplacement EMT de ce BD dans l'ensemble GBDPC de la figure 1 ;
- la figure 16 représente les échanges d'informations entre les unités du système lors d'une élimination d'un BD donné ;
- la figure 17 représente schématiquement une opération, lors de l'élimination d'un BD, de marquage, dans l'unité GIE, d'un indicateur d'élimination dans l'état de BD éliminé ;
- la figure 18 représente les échanges d'informations entre les unités du système lors d'une élimination d'un BDCE sélectionné dans une catégorie donnée ;
- la figure 19 représente schématiquement une opération, lors de l'élimination d'un BDCE sélectionné dans une catégorie donnée, de suppression de l'emplacement EMT de ce BD dans la liste de BDCE correspondante gérée dans l'ensemble GBDPC ;
- la figure 20 représente schématiquement une opération d'identification, dans l'unité GAEI, de l'identité IBD associé à un emplacement EMT ;
- la figure 21 représente les échanges d'informations entre les unités du système lors d'une réception de BD avec substitution (pushout) ;
- la figure 22 représente schématiquement les différentes opérations effectuées dans les unités GBDCE et GMC de l'ensemble GBDPC lors d'une réception de BD avec substitution (pushout) ; et
- la figure 23 est un schéma d'ensemble des différentes unités qui font partie du système de gestion conforme à une variante de la présente invention.

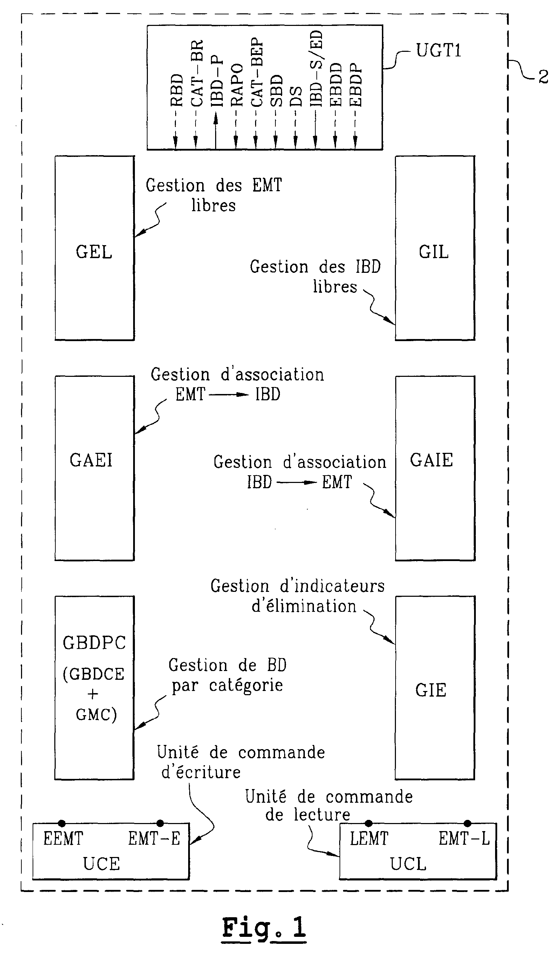

Les éléments principaux qui interviennent dans le dispositif de gestion d'une mémoire tampon conforme à la présente invention seront brièvement décrits par référence à la figure 1. L'ensemble des unités représentées dans cette figure correspond à une configuration complète du dispositif dans le cas où l'on désigne, dans l'ensemble GBDPC, un BD candidat à l'élimination (BDCE) directement par son emplacement en mémoire tampon (EMT). Comme il sera expliqué par la suite, dans un autre cas où l'on désigne un BDCE indirectement par son identité de bloc de données (IBD), on n'a pas besoin de l'unité de gestion GAEI.

Le dispositif 2 comporte les blocs fonctionnels suivants :
- une unité de gestion temporelle des blocs de données mémorisés (UGT1), qui pilote l'ensemble des opérations liées au fonctionnement du dispositif 2 au moyen de signaux de commande et de codes divers qui seront détaillés plus loin ;
- une unité de gestion des adresses d'emplacement libre (GEL), qui permet de gérer, par exemple au moyen d'une liste chaînée, les adresses des emplacements libres dans la mémoire tampon, de fournir à la demande une adresse d'emplacement EMT libre lors de la réception d'un nouveau BD, et de libérer l'adresse d'un emplacement EMT lorsqu'il n'est plus occupé par un BD;
- une unité de gestion d'association EMT->IBD (GAEI), c'est-à-dire de gestion de chaque emplacement EMT relatif à une identité IBD, qui permet de mémoriser, pour chaque emplacement EMT de la mémoire tampon occupé par un bloc de données, l'identité IBD qui lui est associée, selon une relation unidirectionnelle, c'est-à-dire la relation EMT→IBD;
- une unité de gestion des valeurs d'identité IBD libres (GIL), qui permet de gérer, par exemple au moyen d'une liste chaînée, les identités IBD libres, de fournir à la demande une identité IBD libre à associer à un nouveau BD, et de libérer l'identité IBD associée à un BD lorsqu'elle n'est plus utilisée par ce dernier ;
- une unité de gestion d'association IBD->EMT (GAIE), c'est-à-dire de gestion de chaque identité IBD relative à un emplacement EMT, qui permet de mémoriser, pour chaque identité IBD associée à un bloc de données, l'adresse de l'emplacement EMT occupé par ce BD dans la mémoire tampon, selon une relation unidirectionnelle, c'est-à-dire la relation IBD→EMT ;
- un ensemble de gestion de BD par catégorie (GBDPC), comprenant:
   - d'une part une unité de gestion de blocs de données candidats à l'élimination (GBDCE), qui gère les sous-ensembles de BD candidats à l'élimination (BDCE) pour chaque catégorie de BDCE, par exemple au moyen d'une liste chaînée de BDCE par catégorie ;
   - et d'autre part une unité de gestion de marquage de catégorie (GMC), qui mémorise l'appartenance d'un BD à une catégorie donnée ;
- une unité de gestion d'indicateurs d'élimination (GIE), qui associe, à chaque identité IBD occupée, un état binaire indiquant si le BD correspondant a été éliminé ou non ;
- une unité de commande d'écriture (UCE) dans la mémoire tampon; et
- une unité de commande de lecture (UCL) dans la mémoire tampon.

Lors des diverses opérations qu'elle commande, l'unité de gestion temporelle des blocs de données mémorisés UGT1 interagit avec les autres unités précitées par échange des informations suivantes :
- un signal de commande sortant de réception de BD (RBD), actif à l'état 1, commandant une opération de réception d'un nouveau BD à inscrire dans la mémoire tampon ;
- un code sortant de catégorie de BD reçu (CAT-BR), indiquant à quelle catégorie appartient ce BD ; ce signal est donc significatif lorsque le signal RBD est actif (RBD=1);
- un code entrant d'identité de BD reçu (IBD-R), constituant l'identité attribuée au nouveau bloc de données reçu; cette identité, fournie par l'unité unité de gestion d'identités libres GIL, est associée à l'adresse de l'emplacement de la mémoire tampon sélectionné pour recevoir le BD concerné ;
- un signal de commande sortant de réception de BD avec substitution (RAPO), indiquant, lors de la réception d'un nouveau bloc de données, s'il s'agit d'une réception avec substitution (en anglais, 'push-out') ou d'une réception normale sans substitution, respectivement selon l'état logique RAPO=1 ou RAPO=0;
- un code sortant de catégorie de BDCE (CAT-BEP), indiquant dans quelle catégorie un BD candidat à élimination (BDCE) doit être sélectionné, ce code CAT-BEP étant utilisé soit lors d'une opération de réception avec substitution, soit lors d'une opération d'élimination d'un BDCE dans une catégorie donnée; le code CAT-BEP est destiné à l'unité de gestion de BD candidats à l'élimination GBDCE ;
- un signal de commande sortant de service de bloc de données (SBD), destiné aux unités GIL, GAIE et GIE, et commandant une opération de service de BD lorsqu'il est actif à l'état 1 ;
- un signal de commande sortant de dernier service (DS), actif à l'état 1 pour indiquer, lors d'une opération de service de BD, s'il s'agit du dernier service de ce bloc de données (un même BD pouvant être servi plusieurs fois lorsqu'il est par exemple distribué sur plusieurs sorties différentes de la mémoire tampon) ;
- un code sortant IBD-S/ED d'identité de BD, qui peut être soit un BD servi (IBD-S), soit un BD donné destiné à être éliminé (IBD-ED);
- un signal de commande sortant d'élimination de BD donné (EBDD), actif à l'état 1 pour commander une opération d'élimination d'un BD donné; et
- un signal de commande sortant d'élimination d'un BDCE (EBDP), actif à l'état 1 pour commander une opération d'élimination d'un BD candidat à l'élimination dans une catégorie donnée.

Les échanges possibles des signaux de commande et codes précités vis-à-vis des différentes unités du système de gestion sont représentés dans les figures qui suivent par des lignes d'interconnexion : par convention en trait plein pour les codes et en trait pointillé pour les signaux de commande. On notera que les signaux de commande sont supposés actifs à l'état 1 dans les exemples qui suivent.

Dans l'exemple décrit, on suppose que les unités de gestion des emplacements libres (GEL) et de gestion des identités libres (GIL) gèrent chacune leurs entités (respectivement EMT et IBD) libres à l'aide d'une liste chaînée classique dans une mémoire de liens de liste chaînée (adressée respectivement par EMT et IBD), associée à un couple de pointeurs.

Par principe, la mémoire de ces unités GEL ou GIL comporte donc autant de lignes que d'entités gérées (respectivement EMT ou IBD), et chaque ligne de mémoire d'une entité qui se trouve être libre contient le lien adjacent avec [c'est-à-dire l'adresse de] l'entité (respectivement EMT ou IBD) libre suivante dans la liste chaînée d'entités libres, formant ainsi une concaténation ordonnée de ces entités libres.

On rappelle qu'une telle liste chaînée est un exemple de moyen classique parmi d'autres, permettant de gérer en mémoire un sous-ensemble dynamique de L entités [ici les EMT ou IBD libres] parmi P entités possibles [ici tous les EMT ou IBD]. Une telle liste chaînée est gérée à l'aide de deux pointeurs : un pointeur tête de liste et un pointeur fin de liste. Le pointeur tête de liste indique l'adresse de la première entité de la liste, alors que le pointeur fin de liste indique l'adresse de la dernière entité de la liste.

Dans une telle liste chaînée d'entités libres, pour prendre une entité libre, on sélectionne l'adresse de la première entité libre qui est en tête de liste, comme indiquée par le pointeur correspondant. Alors, pour mettre à jour cette liste, on lit dans la mémoire, à l'adresse initialement fournie par ce pointeur tête de liste, l'adresse du lien adjacent vers l'entité libre suivante, et on positionne ce pointeur sur la ligne de mémoire qui correspond à cette adresse lue en mémoire, de sorte que le pointeur tête de liste contient maintenant cette nouvelle adresse de première entité libre en tête de liste.

A l'inverse, pour introduire une nouvelle entité libre dans une telle liste chaînée, on ajoute cette nouvelle entité à la fin de la liste, en écrivant en mémoire, à l'adresse indiquée par le pointeur fin de liste, l'adresse de cette nouvelle entité comme nouveau dernier lien adjacent vers cette nouvelle entité. En outre, pour mettre à jour le pointeur fin de liste, on le positionne sur la ligne de mémoire qui correspond à l'adresse de la nouvelle entité libre ajoutée, de sorte que le pointeur fin de liste contient maintenant cette nouvelle adresse de dernière entité libre en fin de liste.

Par principe, il se trouve qu'une solution basée sur une telle liste chaînée classique, utilisée à titre d'exemple pour les unités GEL et GIL, assure une gestion ordonnée de ses entités. Cependant, il faut noter que, dans l'application présente d'un dispositif de gestion d'une mémoire tampon, la gestion des entités EMT libres et IBD libres, respectivement dans les unités GEL et GIL, ne nécessite généralement pas de gérer ces entités de façon ordonnée. En fait, dans l'invention, on peut aussi bien utiliser d'autres types de moyens permettant gérer les EMT libres et IBD libres, même si ces autres moyens les gèrent dans un ordre quelconque.

Les unités de gestion d'association GAEI et GAIE servent à mémoriser la relation univoque entre l'emplacement EMT occupé par un BD dans la mémoire tampon et l'identité IBD associée à ce BD. L'unité GAEI gère la relation EMT->IBD, tandis que l'unité GAIE gère la relation IBD->EMT. Dans l'exemple décrit, on suppose que chacune de ces unités GAEI et GAIE utilise une mémoire de relation entre deux entités, qui comporte autant de lignes que de valeurs possibles de la première entité (respectivement les adresses EMT et IBD), et dont chaque ligne relative à une première entité occupée contient la valeur correspondante de la seconde entité associée (respectivement IBD et EMT).

L'unité de commande d'écriture UCE a pour rôle de commander l'inscription d'un BD dans la mémoire tampon à une adresse EMT donnée. Elle comporte deux entrées : une première entrée recevant un signal de commande d'écriture en EMT (EEMT), activant l'écriture dans la mémoire tampon, et une deuxième entrée recevant un code d'adresse EMT d'écriture (EMT-E), fournissant l'adresse de l'emplacement EMT où doit être inscrit ce BD. L'unité UCE utilise ces informations EEMT et EMT-E pour exécuter de façon classique l'inscription d'un BD dans la mémoire tampon.

L'unité de commande de lecture UCL a pour rôle de commander la lecture d'un BD dans la mémoire tampon à une adresse EMT donnée. Elle comporte également deux entrées : une première entrée recevant un signal de commande de lecture en EMT (LEMT), activant la lecture dans la mémoire tampon, et une deuxième entrée recevant un code d'adresse EMT de lecture (EMT-L), fournissant l'adresse de l'emplacement EMT où doit être lu ce BD. L'unité UCL utilise ces informations LEMT et EMT-L pour exécuter de façon classique la lecture d'un BD dans la mémoire tampon.

L'unité de gestion d'indicateurs d'élimination GIE a pour rôle de mémoriser, pour chaque identité de BD occupée dans le dispositif, un état binaire associé, dit indicateur d'élimination, qui indique si le BD correspondant a été éliminé ou non. Pour cela, l'unité GIE comporte une mémoire adressée par IBD dont chaque ligne mémorise l'état dit de BD non éliminé (BDNE), par exemple tel que l'état d'un BD éliminé ou non éliminé correspond respectivement à la valeur BDNE=0 ou BDNE=1. Dans l'unité GIE, l'indicateur BDNE associé à un BD est initialement marqué à l'état 1 lors de la réception de ce BD, et il est marqué à l'état 0 en cas d'élimination prématurée éventuelle de ce BD.

Dans l'ensemble de gestion de BD par catégorie (GBDPC) spécifique de l'invention, les unités de gestion GBDCE et GMC assurent la gestion de chaque BD en fonction de la catégorie (typiquement le niveau de priorité) à laquelle il appartient. De façon complémentaire, l'unité GBDCE gère les C sous-ensembles de BD candidats pour élimination (BDCE) relatifs aux n catégories de BD (typiquement, on gère les C sous-ensemble de BDCE correspondant aux n-1 catégories de priorité inférieure), tandis que l'unité GMC mémorise la catégorie à laquelle appartient chaque BD parmi les n catégories possibles.

Dans l'exemple décrit, les C sous-ensembles de BDCE par catégorie sont gérés par l'unité GBDCE à l'aide de C listes chaînées, une liste pour chacun des C sous-ensembles de BDCE correspondant à une catégorie donnée. De façon simple, chaque liste chaînée de BDCE implique l'utilisation d'une mémoire de liens de liste chaînée et un couple de pointeurs associés, un pointeur tête de liste et un pointeur fin de liste.

Cependant, dans l'unité GBDCE qui sera décrite, afin d'éviter la multiplication de ces mémoires (une pour chacune des C listes chaînées de BDCE), on exploite le fait que les différentes listes chaînées de BDCE peuvent être gérées avantageusement dans une seule mémoire commune comportant autant de lignes que de BD à gérer, en observant qu'un BD donné n'appartient qu'à une seule catégorie et qu'il ne peut donc être présent, à tout instant, que dans une seule liste chaînée de BDCE. Ainsi, les C listes chaînées par catégorie étant exclusives, elles peuvent être gérées dans une seule mémoire de liens pour les C listes chaînées, associée à C couples de pointeurs, un couple de pointeurs tête de liste et fin de liste pour chacune des C listes chaînées de BDCE par catégorie.

Alors, dans l'unité GBDCE : lors de la réception d'un nouveau BD, on ajoute un nouveau BDCE à la fin de la liste correspondant à la catégorie à laquelle appartient ce BD reçu ; lors de l'élimination d'un BD appartenant à une catégorie donnée, on prend le premier BD en tête de la liste correspondant à la catégorie désignée ; et lors du relâchement d'un BD après son dernier service ou bien lors de l'élimination d'un BD donné, on retire ce BD de la liste de BDCE correspondant à la catégorie à laquelle appartient ce BD. Ces diverses opérations seront détaillées plus loin.

En complément, pour mémoriser la catégorie à laquelle appartient chaque BD, l'unité GMC comporte une mémoire de relation dont chaque ligne par BD contient, pour chaque BD occupé, le code de sa catégorie. Alors, dans l'unité GMC : lors de la réception d'un nouveau BD, on inscrit en mémoire son code de catégorie ; et lors du dernier service d'un BD ou lors de l'élimination d'un BD donné, on identifie, en lisant en mémoire, la catégorie à laquelle appartient ce BD, afin de pouvoir ensuite retirer, dans l'unité GBDCE, ce BD de la liste de BDCE correspondant à la catégorie à laquelle appartient ce BD.

Dans les unités GBDCE et GMC, on peut prévoir l'adressage des lignes de leurs mémoires respectives par bloc de données de deux manières, à savoir en utilisant comme adresse par BD soit son emplacement EMT, soit son identité IBD.

La désignation d'un BDCE directement par son adresse d'emplacement EMT est plus naturelle et a priori moins coûteuse en mémoire (puisque l'on gère dans ce cas un nombre d'adresses d'EMT qui peut être plus petit que le nombre d'identités IBD). Toutefois, cette approche naturelle nécessite l'utilisation de gérer en plus la fonction de relation EMT→IBD (dans l'unité GAEI), car une opération d'élimination d'un BDCE dans une catégorie donnée nécessite au préalable d'identifier l'identité IBD du BD sélectionné pour élimination. Effectivement, il faut dans ce cas identifier, à partir de l'emplacement EMT du BDCE sélectionné pour élimination dans l'unité GBDCE, son identité IBD associée, laquelle est requise pour marquer, dans l'unité GIE, l'indicateur d'élimination BDNE de ce BD dans l'état de BD éliminé (BDNE=0).

Au contraire, la désignation de BDCE par son identité IBD associée évite le besoin de gérer en plus la fonction de relation EMT→IBD, auquel cas l'unité GAEI n'est pas nécessaire.

A titre d'exemple, on suppose, dans la description qui suit, la première alternative, c'est-à-dire où on utilise, dans les unités GBDCE et GMC, les emplacements EMT comme adressage des lignes de leurs mémoires respectives par bloc de données.

Il sera maintenant décrit les différentes opérations possibles avec le dispositif de gestion 2, comprenant l'unité de gestion temporelle des blocs de données mémorisés UGT1 et les différentes unités de gestion associées, à savoir :
- réception normale de BD, sans substitution
- réception de BD avec substitution ('push-out')
- service de BD, avec ou sans relâchement
- élimination de BD, soit d'un BD donné, soit d'un BD candidat pour élimination dans une catégorie donnée.

### 1. Réception normale de BD (sans substitution).

Il s'agit là du cas de la réception normale d'un BD, appartenant à catégorie donnée, consistant à mémoriser un nouveau BD reçu dans un emplacement libre de la mémoire tampon. Ce premier type de réception de BD est dit de réception normale quand elle est effectuée sans substitution de BD, donc lorsqu'il reste au moins un emplacement libre pour inscrire dans la mémoire tampon le BD reçu, éventuellement compte tenu de la catégorie de ce BD.

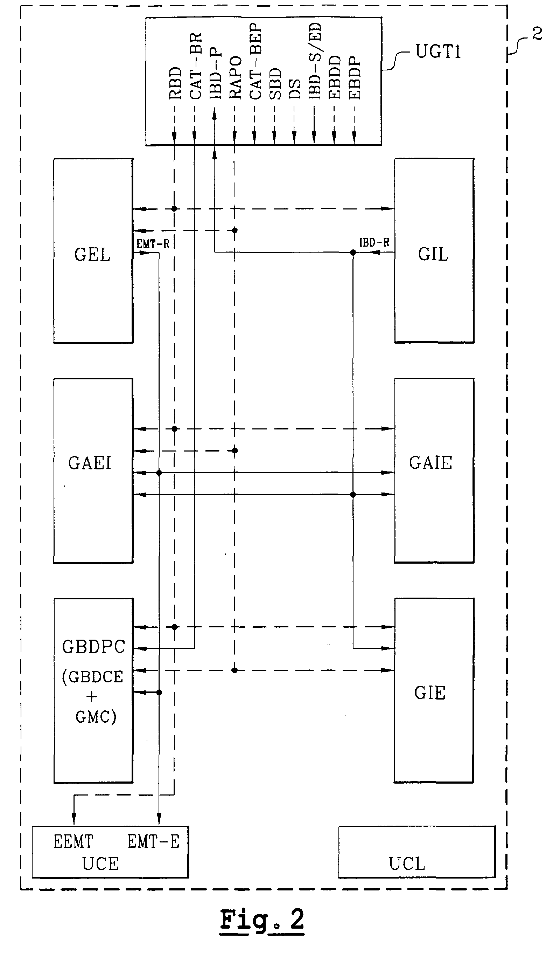

L'échange des informations entre les différentes unités est représenté à la figure 2. L'opération de réception normale de BD est caractérisée par la présence simultanée d'un signal de commande actif RBD=1 (indiquant une opération de réception de bloc de données) et d'un signal de commande inactif RAPO=0 (indiquant que cette réception de BD doit être effectuée sans substitution).

Les signaux RBD=1 et RAP=0 sont transmis par l'unité UGT1 aux unités GEL, GAEI, GIE, et à l'ensemble GBDPC comprenant les unités GBDCE et GMC ; seul le signal RBD=1 est transmis aux unités GIL et GAIE, ainsi qu'à l'entrée EEMT de l'unité de commande en écriture UCE. En effet, les unités GIL et GAIE ne sont pas directement concernées par le fait que l'opération doit être effectuée avec ou sans substitution. En outre, l'unité UGT1 transmet le code de catégorie CAT-BR à l'unité GBDCE pour lui fournir la catégorie (j) du BD en cours de réception.

En réponse aux signaux RBD=1 et RAPO=0, l'unité GEL délivre, à partir de sa liste chaînée d'EMT libres, le premier emplacement EMT libre de sa liste, désigné EMT-R, qui est ainsi attribué au nouveau bloc de données. Ce code d'adresse d'emplacement EMT-R est transmis directement à l'entrée EMT-E de l'unité UCE, aux unités GAEI et GAIE, et à l'ensemble GBDPC comprenant les unités GBDCE et GMC.

Simultanément, et en réponse au signal RBD=1, l'unité GIL fournit à partir de sa liste chaînée d'IBD libres la première identité IBD libre de sa liste, désignée IBD-R, qui est ainsi affectée au nouveau bloc de données. Ce code d'identité IBD-R est transmis à l'unité de gestion UGT1 et aux unités GAEI, GAIE et GIE.

A la réception des codes EMT-R et IBD-R, l'unité GAEI enregistre l'association EMT→IBD dans sa mémoire de relation, comme expliqué précédemment ; de même, l'unité GAIE enregistre l'association IBD→EMT dans sa mémoire de relation.

Dans les unités GMC et GBDCE de l'ensemble GBDPC, d'une part on enregistre, dans la mémoire de l'unité GMC, la catégorie CAT-BR=j du BD reçu ; d'autre part on ajoute éventuellement, dans l'unité GBDCE, l'adresse d'emplacement EMT-R de ce BD à la fin de la liste chaînée de BDCE correspondant à sa catégorie CAT-BR. Le code de catégorie CAT-BR=j, à laquelle appartient le nouveau BD reçu, est mémorisé dans la mémoire de l'unité de gestion de marquage de catégorie (GMC). En outre, si le BD reçu est candidat à l'élimination (BDCE), c'est-à-dire susceptible d'être éliminé en raison de sa catégorie (ce qui est généralement le cas lorsque cette catégorie ne correspond pas au niveau de hiérarchie le plus élevé), ce nouveau BDCE sera inscrit comme tel dans l'unité de gestion de blocs de données candidats à l'élimination GBDCE de l'ensemble GBDPC.

Enfin, on marque, dans la mémoire de l'unité GIE, le fait que ce nouveau BD, désigné par son IBD, est initialement dans l'état de BD non éliminé (BDNE=1).

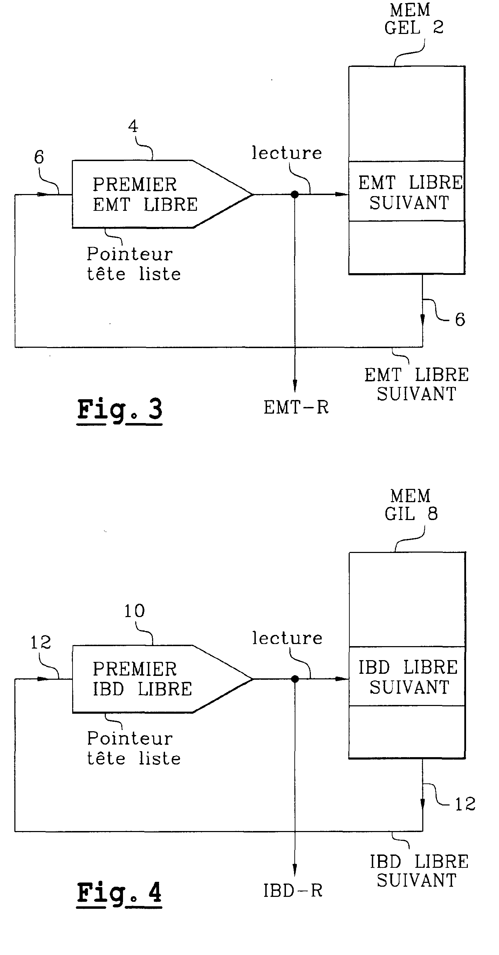

La figure 3 représente schématiquement l'opération effectuée dans l'unité GEL dans l'exemple d'une gestion par liste chaînée, qui consiste à fournir le code de la première adresse d'emplacement EMT libre (EMT-R) de la liste. Comme expliqué auparavant, lorsqu'on utilise une telle liste chaînée, le pointeur tête de liste 4 associé à la mémoire, qui contient l'adresse du premier emplacement EMT libre, fournit directement le code d'adresse d'emplacement EMT-R en sortie. Ensuite, ce pointeur doit être mis à jour pour indiquer maintenant l'adresse de l'emplacement EMT libre suivant dans la liste. Pour identifier cette adresse d'EMT libre suivant, on lit dans la mémoire 2 le contenu de la ligne correspondant à l'adresse du premier emplacement EMT libre indiquée par le pointeur 4. Alors on inscrit dans ce pointeur le code d'adresse d'emplacement EMT libre suivant sortant de la mémoire (boucle 6).

La figure 4 représente schématiquement l'opération effectuée dans l'unité GIL dans l'exemple d'une gestion par liste chaînée, qui consiste à fournir le code de la première identité IBD libre (désignée IBD-R). Cette opération s'effectue exactement comme pour le cas précédent dans l'unité GEL. Le pointeur tête de liste 10 associé à la mémoire 8 fournit directement le code d'identité IBD-R en sortie. Ensuite, ce pointeur est mis à jour en lisant, dans la mémoire 8, le contenu de la ligne correspondant à la première identité d'IBD libre indiquée par le pointeur 10, et en inscrivant dans ce pointeur le code d'identité d'IBD libre suivant sortant de la mémoire par la boucle 12, à l'instar de la boucle 6 précitée.

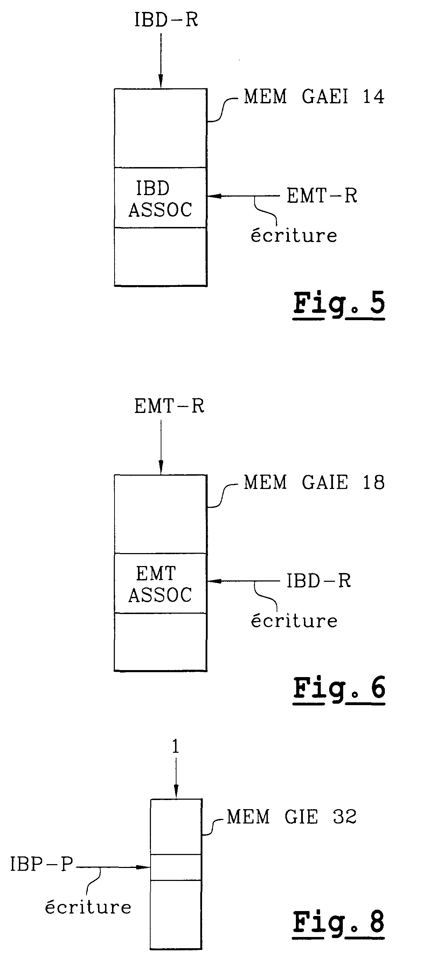

La figure 5 représente schématiquement l'opération effectuée au niveau de la mémoire de relation 14 de l'unité GAEI pour mémoriser la relation EMT->IBD, c'est-à-dire pour effectuer l'inscription en mémoire de l'identité IBD-R associée au nouveau BD reçu désigné par l'adresse de son emplacement EMT-R. Comme expliqué auparavant, une telle mémoire de relation entre deux entités comporte autant de lignes que de valeurs possibles de la première entité (ici les adresses EMT), et dont chaque ligne relative à une première entité (EMT) occupée contient la valeur correspondante de la seconde entité associée (ici IBD). Lors d'une réception de BD, l'opération de mémorisation de la relation EMT->IBD dans l'unité GAEI s'effectue en inscrivant, dans la mémoire de relation 14 le code entrant d'identité IBD-R (fourni par l'unité GIL) dans la ligne de mémoire correspondant au code entrant d'adresse d'emplacement EMT-R (fourni par l'unité GEL).

La figure 6 représente schématiquement l'opération effectuée au niveau de la mémoire de relation 18 de l'unité GAIE pour mémoriser la relation IBD->EMT, c'est-à-dire pour effectuer l'inscription en mémoire de l'adresse d'emplacement EMT-R attribué au nouveau BD reçu désigné par son identité IBD-R. Cette opération est tout à fait analogue à celle effectuée précédemment dans l'unité GAEI. Lors d'une réception de BD, l'opération de mémorisation de la relation IBD->EMT dans l'unité GAIE s'effectue en inscrivant, dans la mémoire de relation 18 le code entrant d'adresse d'emplacement EMT-R (fourni par l'unité GEL) dans la ligne de mémoire correspondant au code entrant d'identité IBD-R (fourni par l'unité GIL).

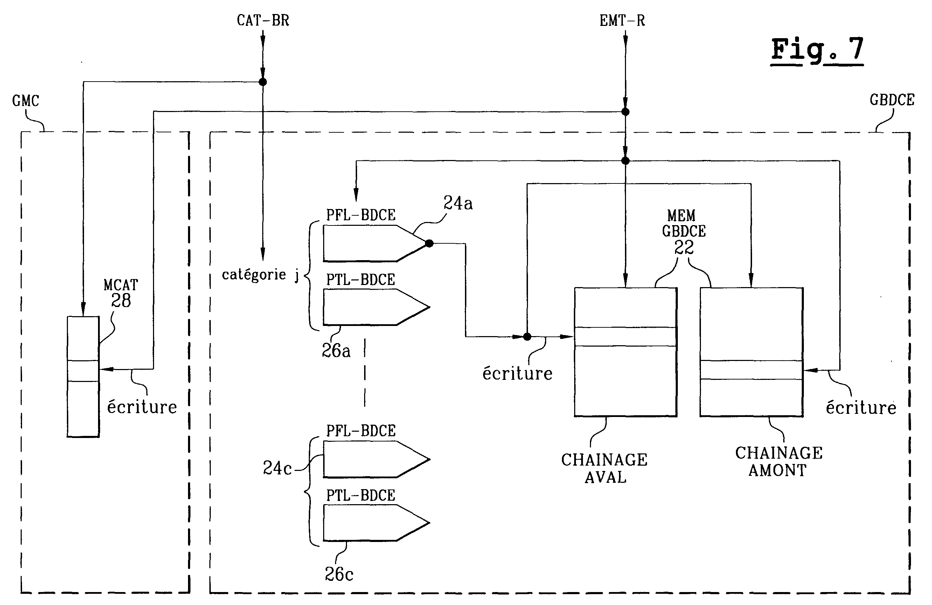

La figure 7 représente schématiquement les opérations effectuées conjointement dans les unités GBDCE et GMC de l'ensemble de gestion des BD par catégorie GBDPC.

Comme expliqué auparavant, l'unité GBDCE gère les différents sous-ensembles de BD candidats pour élimination (BDCE) relatifs aux n catégories de BDCE possibles, tandis que l'unité GMC mémorise la catégorie à laquelle appartient chaque BD.

Dans l'unité GMC, lors de la réception d'un nouveau BD sans substitution, on mémorise la relation EMT->catégorie, en inscrivant la catégorie CAT-BR du BD reçu, dans la mémoire de relation MCAT 28, à son adresse d'emplacement EMT-R fournie par l'unité GEL.

Dans l'unité GBDCE, les C sous-ensembles de BDCE par catégorie sont gérés par l'unité GBDCE à l'aide de C listes chaînées, une pour chacun des C sous-ensembles de BDCE correspondant à une catégorie donnée. Dans chacune de ces C listes chaînées de BDCE par catégorie, l'unité GBDCE gère les BD candidats à l'élimination de façon ordonnée, pour permettre, en cas de besoin, de sélectionner, dans une catégorie donnée, le premier BDCE à éliminer de la mémoire tampon, par exemple lors d'une réception de BD avec substitution. Alors ce BDCE sélectionné est le premier en tête de la liste chaînée, désigné par le pointeur tête de liste de BDCE qui correspond à la catégorie donnée.

On peut noter que, selon l'algorithme utilisé pour contrôler les pertes de blocs de données dans les applications considérées du dispositif de gestion de mémoire tampon, l'ordre dans lequel on sélectionne un BD candidat à l'élimination (BDCE) peut être important ou bien indifférent. Si cet ordre est important, l'unité GBDCE de l'invention doit être réalisée par des moyens de gestion respectant l'ordre des BDCE, par exemple à l'aide de listes chaînées comme supposé dans l'exemple décrit. Si cet ordre est indifférent, on peut aussi bien utiliser d'autres types de moyens permettant gérer les BDCE, même si ces autres moyens les gèrent dans un ordre quelconque.

Dans l'exemple d'unité GBDCE qui est décrite, comme expliqué auparavant, afin d'éviter la multiplication des mémoires de liens de liste chaînée correspondantes (une pour chacune des C listes chaînées de BDCE), on exploite le fait que les différentes listes chaînées de BDCE peuvent être gérées avantageusement dans une seule mémoire commune 22 comportant autant de lignes que de BD à gérer (un BD donné n'appartenant qu'à une seule catégorie et ne pouvant donc être présent que dans une seule liste chaînée de BDCE), chaque ligne de mémoire étant ici supposée adressée par le code d'emplacement EMT attribué au BD. Ainsi, les C listes chaînées de BDCE par catégorie sont exclusives et peuvent donc être gérées dans une seule mémoire 22 de liens de liste chaînée. Bien entendu, le même résultat peut être obtenu en remplaçant cette mémoire commune 22 par C mémoires, chacune étant dédiée à la gestion de l'une des n listes chaînées de BDCE par catégorie.

La mémoire commune 22 est associée à C couples de pointeurs (24a/26a, ...24C/26C), un couple de pointeurs tête de liste et fin de liste pour chacune des C listes chaînées de BDCE par catégorie.

Dans l'unité GBDCE, lors de la réception d'un nouveau BD sans substitution, l'opération consiste à ajouter un nouveau BDCE à la fin de la liste correspondant à la catégorie CAT-BR=j à laquelle appartient ce BD reçu.

Toutefois, comme décrit par la suite, lorsqu'il faudra retirer un BDCE donné de sa liste chaînée de BDCE (par exemple quand ce BD sera relâché après avoir été servi), le BDCE correspondant peut se trouver ailleurs qu'à la tête ou à la fin de cette liste, c'est-à-dire au sein de sa liste. Afin de pouvoir retirer un BDCE au sein de sa liste, les listes chaînées de BDCE sont organisées en double chaînage, chaque entité (ici BDCE adressé par EMT) de la liste étant relié par deux liens adjacents, un lien adjacent en aval (avec l'entité EMT suivante) et par un lien adjacent en amont (avec l'entité EMT précédente). Cette technique classique de liste chaînée en double chaînage permet de maintenir une liste ordonnée des entités EMT même lorsque l'une d'entre elles est retirée au sein de la liste. Pour ce faire, à partir de l'adresse de l'entité EMT à retirer, on identifie les adresses des entités EMT adjacentes (suivante et précédente) dans la liste, qui sont indiquées par le couple de liens adjacents en aval et en amont de l'entité EMT à retirer ; puis on établit des nouveaux liens réciproques entre les deux entités EMT adjacentes identifiées : un lien adjacent en aval, vers l'entité EMT suivante à partir de l'entité EMT précédente ; et un lien adjacent en amont, vers l'entité EMT précédente à partir de l'entité EMT suivante. En pratique, comme représenté sur la figure 7, ceci implique que la mémoire commune 22 peut être réalisée sous forme de deux mémoires avec adressage séparé, l'une pour le chaînage aval et l'autre pour le chaînage amont.

Ainsi, dans la figure 7, lors de la réception d'un nouveau BD sans substitution, on ajoute l'adresse d'emplacement EMT-R du BD reçu, comme nouveau BDCE, à la fin de la liste chaînée de BDCE requise (relative à la catégorie CAT-BR=j), si la catégorie de ce BD indique qu'il est susceptible d'être éliminé, c'est-à-dire qu'il appartient à l'une des C catégories de BDCE. Si c'est le cas, on sélectionne le couple de pointeurs (24a/26a) associé à la liste chaînée correspondant à la catégorie CAT-BR=j (fournie par l'unité UGT1). Alors, pour établir le lien adjacent en aval, on utilise le pointeur fin de liste PFL-BDCE 24a de ce couple pour adresser la partie chaînage aval de la mémoire 22 et y inscrire le code d'emplacement EMT-R (fourni par l'unité GEL) du BDCE ajouté ; pour établir le lien adjacent en amont, on adresse la partie chaînage amont de la mémoire 22 avec le code d'emplacement EMT-R et on y inscrit le code d'emplacement EMT indiqué par le pointeur fin de liste PFL-BDCE 24a. Enfin, on met à jour ce pointeur en y inscrivant le code d'emplacement EMT-R du BDCE ajouté comme nouveau dernier BDCE en fin de liste.

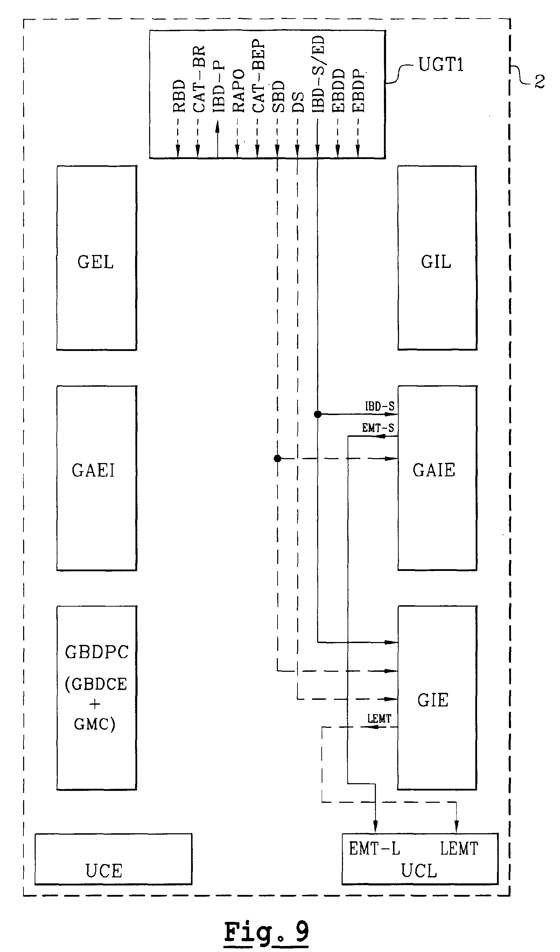

La figure 8 représente la mémoire MIE 32 de l'unité de gestion des indicateurs d'élimination GIE. Cette mémoire comporte une ligne pour chaque valeur possible d'identité IBD dans le dispositif, chaque ligne permettant de mémoriser un indicateur binaire d'état de BD non éliminé (BDNE) servant à indiquer à tout instant si un BD donné, désigné par son identité IBD, est éliminé ou non. Dans l'exemple décrit, cet indicateur binaire BDNE est tel que l'état d'un BD éliminé ou non éliminé correspond respectivement à BDNE=0 ou BDNE=1. l'indicateur BDNE associé à un BD est donc initialement marqué en 1 lors de la réception de ce BD.

Ainsi, dans l'unité GIE lors de la réception d'un nouveau BD, le code entrant d'identité IBD-R, fourni par l'unité GIL, adresse la mémoire MIE 32 pour inscrire un indicateur BDNE de valeur 1 dans la ligne correspondant à cette identité IBD-R. Cet état logique BDNE=1 est initialisé par l'unité GIE en réponse aux signaux de commande RBD=1 et RAPO=0.

### 2. Service d'un bloc de données (SBD=1) sans relâchement (DS=0).

Une telle opération de service d'un BD sans relâchement peut exister dans le cas général d'une discipline de service selon laquelle un même BD peut être lu plusieurs fois dans la mémoire tampon , à des temps de service différents. Alors, la lecture d'un BD ne peut impliquer son relâchement que lorsqu'il s'agit du dernier service prévu pour ce BD, comme indiqué par le signal de commande actif DS=1 fourni par l'unité UGT1. Dans le cas particulier d'une discipline de service selon laquelle un même BD ne peut être lu qu'une seule fois dans la mémoire tampon, l'unité UGT1 fournirait donc systématiquement un signal de commande actif DS=1 à chaque temps de service.

Le présent chapitre traite d'abord le cas où le service du BD n'est pas le dernier (DS=0), donc sans relâchement, du fait qu'encore au moins un autre service de ce BD est prévu.

Les échanges d'informations entre les différentes unités sont représentés sur la figure 9. Le service d'un BD sans relâchement est caractérisé par la présence simultanée d'un signal de commande actif SBD=1 (indiquant qu'il s'agit d'un service de BD) et d'un signal de commande DS=0 (indiquant qu'il ne s'agit pas de son dernier service).

L'unité UGT1 transmet ces deux signaux SBD et DS à l'unité GIE, et uniquement le signal SBD à l'unité GAIE.

En outre, l'unité UGT1 transmet le code d'identité IBD-S du BD faisant l'objet du service, vers les unités GAIE et GIE.

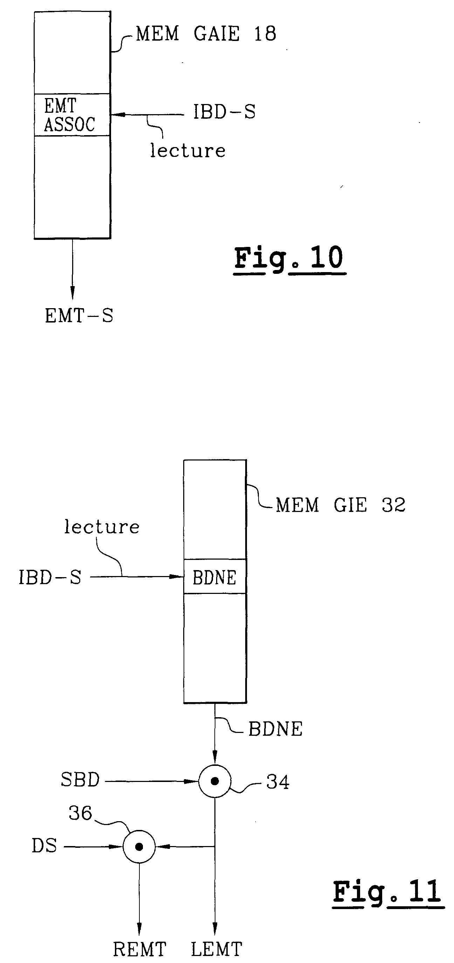

Comme le montre la figure 10, le code entrant d'identité IBD-S (flèche 20), fourni par l'unité UGT1, adresse en lecture la mémoire de relation 18 de l'unité GAIE pour identifier le code sortant d'emplacement associé EMT-S, selon la relation IBD>EMT mémorisée auparavant lors de la réception du BD (cf. chapitre 1). Ce code d'emplacement associé EMT-S, qui constitue l'adresse de lecture du BD servi dans la mémoire tampon, est transmis à l'entrée EMT-L de l'unité de commande de lecture UCL.

Dans l'unité GIE, le code entrant d'identité IBD-S, fourni par l'unité UGT1, adresse en lecture la mémoire d'indicateurs 32 pour identifier l'état de l'indicateur BDNE associé à ce BD. Alors on réalise une séquence d'opérations logiques sur l'indicateur BDNE lu dans cette mémoire, comme illustré en figure 11.

L'indicateur BDNE lu en mémoire indique si ce BD est dans l'état non éliminé (BDNE=1) ou éliminé (BDNE=0). Il est en effet possible, lors du service d'un BD, que ce BD désigné par son identité IBD ne soit plus présent dans l'emplacement EMT qu'il occupait dans la mémoire tampon, donc qu'il ait été prématurément éliminé, alors même qu'il est considéré comme étant encore géré sur la base de son identité IBD dans les arrangements de gestion temporelle de l'unité UGT1. Autrement dit, il existe un mode de fonctionnement selon lequel un BD peut être prématurément éliminé de la mémoire tampon, permettant ainsi d'inscrire un nouveau BD dans l'emplacement EMT libéré qu'il occupait, sans avoir à relâcher immédiatement son identité associée IBD, évitant ainsi de modifier les arrangements de gestion temporelle (par exemple des files d'attentes) de BD qui sont gérés sur la base des identités IBD, si l'on devait retirer ce BD ainsi éliminé. Cette disposition, qui fait l'objet du brevet FR96104391 de la demanderesse, permet de simplifier la réalisation des arrangements de gestion temporelle de BD associés à une mémoire tampon.

L'indicateur BDNE issu de la mémoire 32 est reçu sur une première entrée d'une première porte logique ET 34 dont la seconde entrée reçoit le signal SBD actif à l'état 1.

La sortie de la porte logique ET 34 délivre donc dans ce cas un signal sortant de commande de validation de lecture en mémoire tampon LEMT, dont l'état dépend de celui de l'indicateur BDNE :
- Si le BD n'a pas été déjà éliminé (BDNE=1), le signal LEMT est effectivement actif à l'état logique 1 du fait que la condition BDNE=1.SBD=1 est validée. Le signal sortant de commande LEMT actif à l'état 1 est transmis à l'entrée LEMT de l'unité de commande de lecture UCL pour valider la lecture, dans la mémoire tampon, du BD servi.
- Si le BD a été déjà éliminé (BDNE=0), le signal LEMT n'est pas actif (à l'état logique 0), le signal sortant de commande LEMT n'est pas actif, et la lecture du BD servi n'est donc pas validée dans l'unité UCL.

La sortie de la porte ET 34 est également fournie à une première entrée d'une deuxième porte ET 36 dont une seconde entrée est reliée au signal DS. Cette porte ET 36 fournit un signal sortant de commande REMT de relâchement de la mémoire tampon lorsque la condition LEMT=1.DS=1 est remplie, c'est-à-dire lors du dernier service d'un bloc de données (DS=1) et si le BD servi n'a pas été déjà éliminé (BDNE=1). Dans le cas considéré, le signal DS n'est pas actif (DS=0), et le signal sortant REMT n'est donc pas activé (REMT=0).

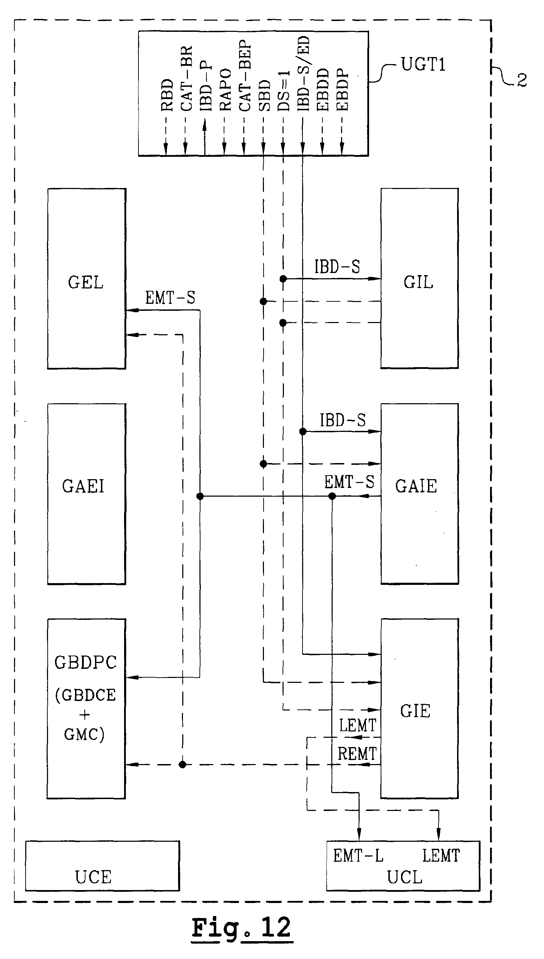

Comme on le verra par la suite (cf. figure 12), ce signal sortant REMT est transmis d'une part à l'unité de gestion des emplacements libres GEL et d'autre part aux unités de l'ensemble de gestion GBDPC. Le signal de commande de relâchement REMT est utilisé par ces unités dans le cas d'un dernier service auquel cas REMT=1, comme signal de commande pour déclencher la libération de l'emplacement EMT dans l'unité GEL et pour retirer le BD de la liste de BDCE dans l'unité GBDCE. Dans le cas présent, les unités GEL, GMC, et GBDCE restent inactives puisqu'elles reçoivent un signal REMT à l'état 0.

On note que le service d'un BD sans relâchement de son IBD et de son EMT (ou de son IBD seulement) n'implique pas de changement dans les listes chaînées des unités GIL, GEL, GBDCE. Ceci n'est pas le cas lorsque la lecture d'un BD de la mémoire tampon concerne un dernier service, comme il apparaîtra dans les chapitres 3 et 4 qui suivent.

### 3. Dernier service d'un bloc de données (DS=1) avec relâchement d'EMT et d'IBD.

L'opération de dernier service d'un BD a lieu lorsque, après ce service, ce même BD aura été servi un nombre de fois prédéterminé dans la mémoire tampon auquel cas il peut être relâché.

On considérera dans le présent chapitre le cas normal où le dernier service d'un BD implique le relâchement à la fois de son emplacement EMT et de son identité IBD, c'est-à-dire quand le BD servi n'a pas été prématurément éliminé (BDNE=1), et que le BD est donc toujours présent dans son emplacement EMT dans la mémoire tampon ; le cas où le BD servi a été prématurément,éliminé (BDNE=0) est traité au chapitre 4 qui suit.

On note qu'à la différence d'un service de BD sans relâchement (cf. chapitre 2), le dernier service d'un BD avec relâchement d'IBD et d'EMT nécessite en plus d'une part de libérer l'emplacement EMT et l'identité IBD de ce BD qui deviennent libres et qui doivent être ajoutés respectivement aux listes chaînées d'EMT libres (dans GEL) et d'IBD libres (dans GIL), et d'autre part de retirer éventuellement ce BD de sa liste de BDCE dans l'unité GBDCE.

Les échanges d'informations entre les différentes unités de gestion pour ce cas normal de dernier service de BD sont représentés sur la figure 12. Le dernier service d'un BD est caractérisé par la présence simultanée des signaux de commande SBD (service bloc de données) et DS (dernier service) tous deux actifs à l'état 1 fournis par l'unité de gestion temporelle UGT1.

L'unité UGT1 transmet ces deux signaux aux unités GIL et GIE, et seulement le signal SBD à l'unité GAIE. En outre, l'unité UGT1 transmet, aux unités GAEI et GAIE, le code d'identité IBD-S du BD faisant l'objet de son dernier service.

Le traitement effectué dans l'unité GAIE est identique à celui décrit plus haut dans le cas d'un service sans relâchement (cf. section 2, figure 11); sa description ne sera pas répétée par souci de concision. A partir du code entrant d'identité IBD-S, on lit en mémoire le code sortant d'emplacement associé EMT-S, et on transmet ce code EMT-S à l'entrée EMT-L de l'unité de commande de lecture UCL pour adresser la mémoire tampon.

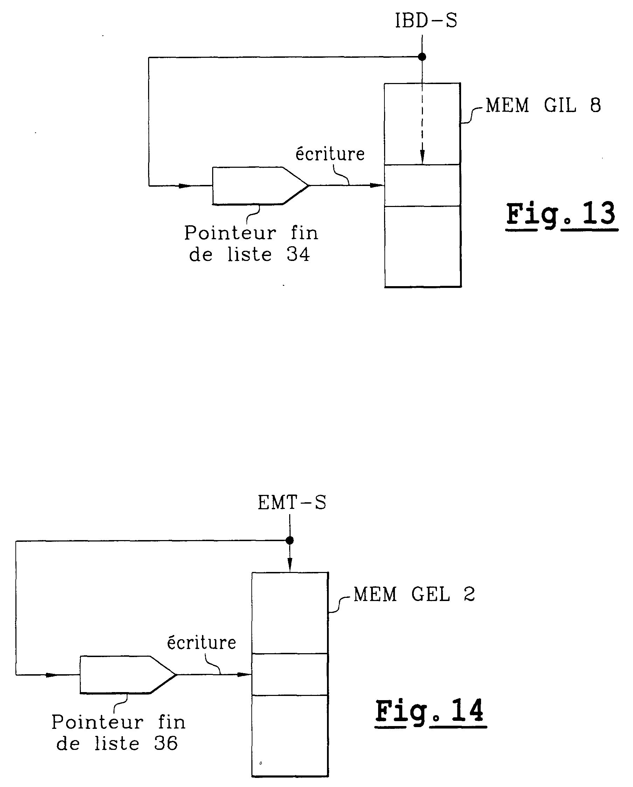

Dans l'unité GIL, on relâche l'identité IBD de ce BD qui est libérée. Cette opération, illustrée schématiquement par la figure 13, consiste à ajouter cette identité IBD (ici désignée par IBD-S) à la fin de la liste chaînée des IBD libres. Pour cela, le code entrant d'identité IBD-S est fourni à l'entrée de la mémoire 8, et on l'inscrit comme lien adjacent à l'adresse fournie par le pointeur fin de liste 34. Ensuite, on met à jour ce pointeur 34 en y inscrivant ce code d'identité IBD-S comme nouvelle dernière IBD libre de la liste.

Dans l'unité GIE, le traitement effectué est semblable à celui décrit plus haut dans le cas d'un service sans relâchement (cf. chapitre 2, figure 11) : le traitement est identique en ce qui concerne le processus d'identification, dans la mémoire d'indicateurs, de l'indicateur d'élimination BDNE associé au BD servi ; mais il est différent en ce qui concerne le traitement logique effectué sur l'indicateur BDNE lu en mémoire 32, puisque DS=1 dans le cas présent. Alors, l'indicateur BDNE, identifié dans la mémoire 32 à partir de l'adresse IBD-S du BD servi, est trouvé à l'état 1 (BD non éliminé supposé dans le cas présent). Le signal SBD étant actif à l'état 1, le signal sortant de commande LEMT en sortie de la porte ET 34 est alors actif à l'état 1, et il est transmis à l'entrée LEMT de l'unité de commande de lecture UCL pour valider la lecture du BD à servir.

Toutefois, le signal DS étant maintenant actif à l'état 1, et le signal REMT de relâchement d'EMT en sortie de la porte ET 36 est alors actif à l'état 1. Ce signal de commande REMT=1 est transmis à l'unité GEL et aux unités GBDCE et GMC de l'ensemble GBDPC, respectivement pour relâcher l'emplacement EMT de ce BD qui devient libre et qui doit être ajouté à la liste chaînée d'EMT libres dans GEL, et pour retirer ce BD de sa liste de BDCE dans l'unité GBDCE, comme il sera expliqué plus loin.

Au niveau des unités GEL, GMC, et GBDCE précitées, le BD faisant l'objet d'un relâchement est traité non pas sur la base de son identité IBD, mais sur celle de son emplacement EMT. Ces unités reçoivent donc, de l'unité GAIE, le code d'emplacement EMT-S du BD, comme le montre la figure 12.

Dans l'unité GEL, on relâche l'emplacement EMT occupé par ce BD, cet emplacement désigné EMT-S étant maintenant libéré. Cette opération, illustrée schématiquement par la figure 14, consiste à ajouter cet emplacement EMT-S à la fin de la liste chaînée des EMT libres. Pour cela, le code entrant d'emplacement EMT-S est fourni à l'entrée de la mémoire 2, et on l'inscrit comme lien adjacent à l'adresse fournie par le pointeur fin de liste 36. Ensuite, on met à jour ce pointeur 36 en y inscrivant ce code d'emplacement EMT-S comme nouveau dernier EMT libre de la liste.

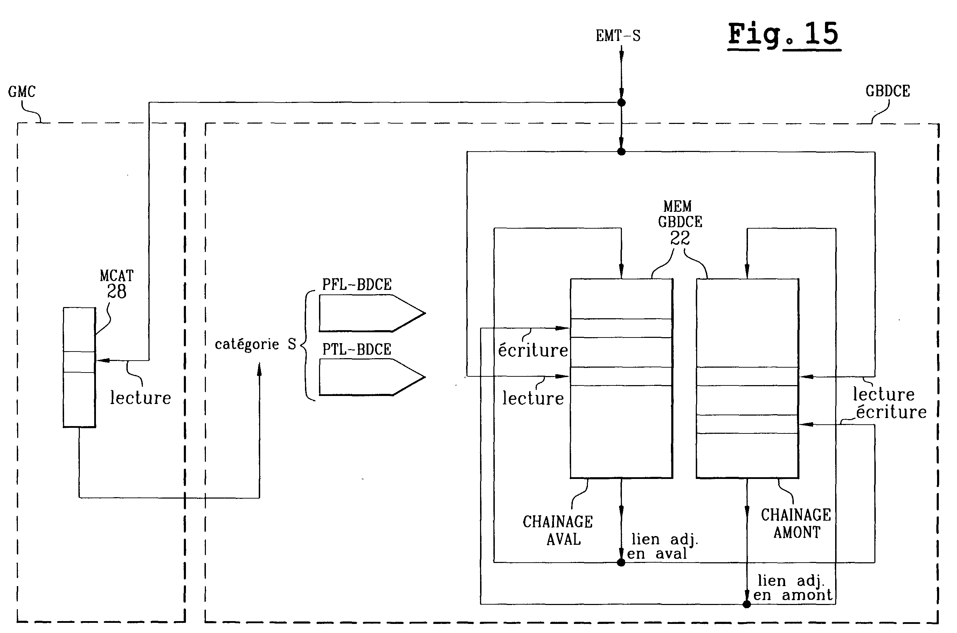

La figure 15 représente, dans les unités GMC et GBDCE de l'ensemble GBDPC, l'opération de suppression de l'emplacement EMT (ici désigné EMT-S) dans la liste de BD candidats à l'élimination (BDCE) à laquelle appartient le BD relâché. Le code entrant d'emplacement EMT-S est d'abord utilisé pour identifier, dans l'unité GMC, la catégorie CAT-S à laquelle appartient ce BD. Pour cela, on lit cette catégorie dans la ligne correspondant à l'adresse EMT-S dans la mémoire MCAT 28. Le code de catégorie CAT-S identifié pour le BD relâché permet de déterminer si ce BD y était inscrit comme BD candidat à l'élimination (BDCE) dans l'une des C listes de BDCE gérées par l'unité GBDCE, et, si oui, dans quelle liste de BDCE, auquel cas le code de catégorie CAT-S est transmis à l'unité GBDCE.

Dans cette unité GBDCE, la suppression de l'entité EMT-S de la liste (à double chaînage) de BDCE concernée consiste d'abord à lire, dans les deux parties (chaînage aval et chaînage amont) de la mémoire 22, la ligne correspondant à l'adresse d'emplacement EMT-S (flèche 38) pour identifier les liens adjacents en aval et en amont relatifs à cet emplacement EMT-S, respectivement dans les parties chaînage aval et chaînage amont de la mémoire 22. Ensuite, on établit les liens adjacents directs entre les adresses d'emplacement EMT ainsi identifiées (EMT suivant et EMT précédent dans la liste chaînée) de part et d'autre de l'emplacement EMT-S ainsi supprimé de la liste. Pour établir le nouveau lien adjacent en aval de l'EMT précédent vers l'EMT suivant, on inscrit, dans la partie chaînage aval de la mémoire 22, le code de l'EMT suivant à l'adresse de l'EMT précédent. Inversement, pour établir le nouveau lien adjacent en amont de l'EMT suivant vers l'EMT précédent, on inscrit, dans la partie chaînage amont de la mémoire 22, le code de l'EMT précédent à l'adresse de l'EMT suivant.

On peut remarquer que, dans le cas général décrit précédemment où l'emplacement EMT-S du BD relâché se trouve au sein d'une liste chaînée de BDCE, cette opération de suppression peut en fait être effectuée sans avoir besoin du code de catégorie CAT-S, dans le cas où l'on utilise - comme supposé ici - une seule mémoire commune 22 pour gérer l'ensemble des C listes chaînées de BDCE (au contraire, si l'on utilise une mémoire de liens dédiée pour chacune des C listes chaînées de BDCE, alors on aurait besoin de sélectionner la mémoire de liens particulière utilisée pour gérer la liste correspondant à la catégorie CAT-S). Dans cette hypothèse, l'unité GBDCE a néanmoins besoin de connaître le code de catégorie CAT-S pour les cas où l'emplacement EMT-S se trouve soit en tête de liste, soit en fin de liste, ou encore en tête et en fin de liste (dans le cas d'une liste ne comportant qu'une seule entité EMT, à savoir cet EMT-S), afin de pouvoir sélectionner le couple de pointeurs approprié 24s/26s, relatif à la catégorie CAT-S du BD relâché, parmi les C couples de pointeurs (non représentés sur cette figure 15), et pouvoir effectuer leur mise à jour.

### 4. Dernier service d'un bloc de données (DS=1) avec relâchement d'IBD seulement.

Ce deuxième cas de dernier service de BD est rencontré lorsque le BD concerné par le dernier service a été éliminé prématurément (BDNE=0), c'est-à-dire un BD déjà libéré de son emplacement EMT, mais tout en ayant préservé son identité IBD jusqu'au dernier service de ce BD éliminé (afin de ne pas avoir à effectuer de réarrangement, comme expliqué auparavant).

Les échanges d'informations entre les différentes unités sont sensiblement les mêmes que pour le cas normal du dernier service d'un BD non éliminé avec relâchement d'EMT et d'IBD (cf. chapitre 3) ; aussi on se rapportera encore à la figure 12.

On note d'abord que les unités GAIE et GIL effectuent les mêmes opérations relatives à l'identité IBD-S du BD servi que dans le cas normal d'un dernier service avec relâchement d'EMT et d'IBD, à savoir : la libération de l'identité IBD-S dans l'unité GIL, ainsi que l'identification de l'emplacement EMT-S associé à l'identité IBD-S dans l'unité GAIE [bien que cette opération d'identification soit inutile dans ce cas, une solution simple consiste à laisser faire cette opération même lorsqu'on n'a pas besoin du code EMT-S ; ceci évite d'ajouter dans l'unité GAIE une restriction supplémentaire sur la validation (SBD=1) de cette opération]. Ces opérations, ayant été déjà décrites (cf. chapitre 3), ne seront pas répétées par souci de concision.

D'autre part, l'unité GIE effectue une opération semblable d'identification de l'état de l'indicateur d'élimination BDNE, dans la mémoire 32, à partir de l'identité IBD-S (cf. figure 11), mais avec un résultat différent dans le cas présent puisque l'indicateur BDNE est ici trouvé dans l'état BDNE=0. Aussi, la sortie de la porte 34 fourni un signal de commande de lecture LEMT inactif à l'état 0, auquel cas aucune lecture de la mémoire tampon n'est validée dans l'unité UCL à l'adresse EMT-S (inutilisée dans ce cas). En outre, la sortie de la porte 36 fourni un signal de commande de relâchement REMT inactif à l'état 0, auquel cas aucun relâchement d'EMT n'est validé dans les unités GEL et GBDCE à l'adresse EMT-S (toujours inutilisée dans ce cas).

### 5. Elimination d'un BD donné.

Cette opération concerne l'élimination d'un BD donné de la mémoire tampon, sur commande de l'unité de gestion temporelle UGT1, quelle que soit la raison de cette élimination, par exemple pour supprimer un BD incorrect. Elle peut donc concerner toutes les catégories possibles de BD. L'élimination d'un BD donné, désigné par son identité IBD, implique le marquage de l'indicateur d'élimination de ce BD dans l'état de BD éliminé (BDNE=0) dans l'unité GIE, la libération de l'emplacement EMT occupé par ce BD dans l'unité GEL, et la suppression éventuelle de l'emplacement EMT occupé par ce BD de la liste des BD candidats à élimination relative à la catégorie à laquelle appartient ce BD ; ces deux dernières opérations impliquent donc l'identification préalable, dans l'unité GAIE, de l'emplacement EMT occupé par ce BD désigné par son identité associée IBD.

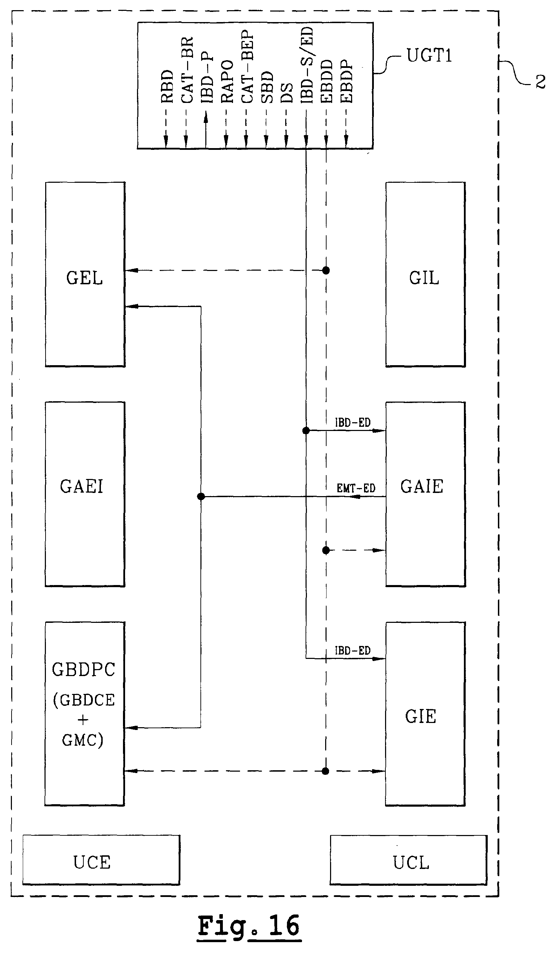

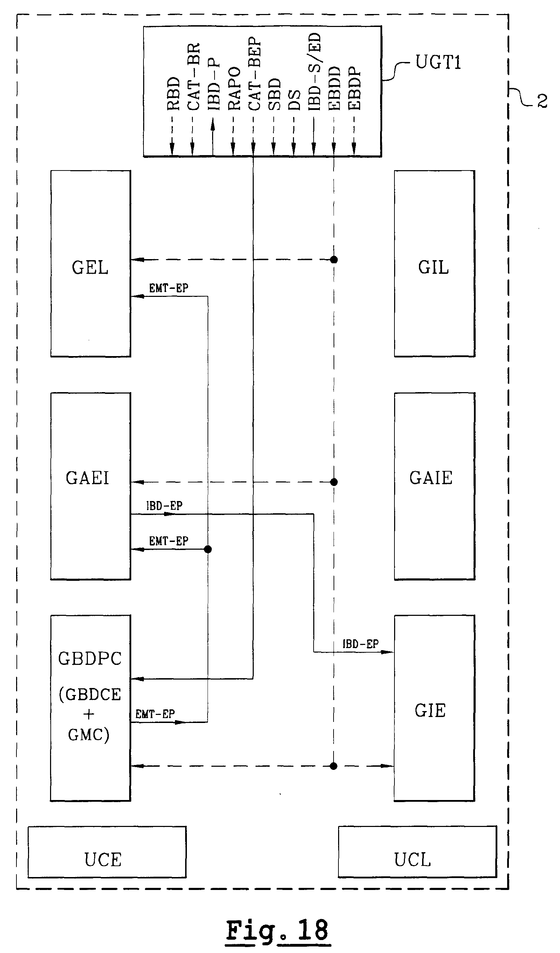

Les échanges d'informations entre les différentes unités sont représentés sur la figure 16. L'élimination d'un BD donné est commandée par l'unité UGT1 en activant le signal de commande sortant d'élimination de BD donné EBDD à l'état 1. Ce signal est transmis aux unités GAIE, GIE, et GEL, ainsi qu'aux unités GBDCE et GMC de l'ensemble GBDPC, pour y activer cette opération d'élimination. L'unité UGT1 transmet le code sortant d'identité IBD du BD à éliminer (ici désigné IBD-ED) aux unités GIE et GAIE.

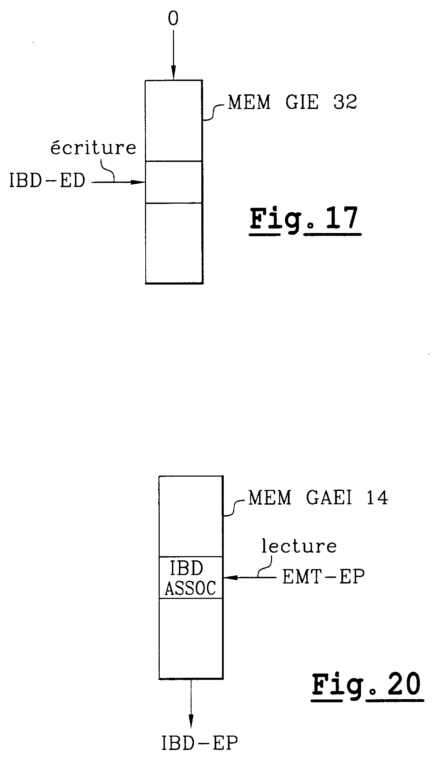

Au niveau de l'unité GIE, on marque l'indicateur d'élimination du BD éliminé dans l'état BDNE=0, pour mémoriser le fait que ce BD est maintenant dans l'état éliminé. Pour cela, comme le montre la figure 17, on inscrit, dans la mémoire d'indicateurs 32, une valeur logique d'indicateur BDNE=0 à l'adresse correspondant à l'identité IBD-ED reçue.

Au niveau de l'unité GAIE, on identifie l'adresse d'emplacement EMT occupée par le BD éliminé (désignée EMT-ED) à partir de son identité IBD-ED reçue, en effectuant une opération de lecture dans la mémoire de relation 18, comme décrit précédemment par référence à la figure 10 (cf. chapitre 2). Le code d'adresse d'emplacement EMT-ED ainsi obtenu est transmis aux unités GEL, GMC, et GBDCE.

Au niveau de l'unité GEL, on libère l'emplacement EMT-ED occupé par ce BD éliminé, en ajoutant cet emplacement EMT-ED libéré à la fin de la liste chaînée des EMT libres. Pour cela, on effectue la même opération que celle décrite précédemment par référence à la figure 14 (cf. chapitre 3), en remplaçant ici le code d'emplacement EMT-S par EMT-ED.

Au niveau des unités GMC et GBDCE de l'ensemble GBDPC, on identifie d'abord la catégorie à laquelle appartient le BD éliminé, et, si ce BD appartient à une catégorie de BD candidats à l'élimination, on supprime son emplacement EMT-ED dans la liste de BD candidats à l'élimination (BDCE) correspondant à sa catégorie identifiée [noter qu'il est possible de forcer l'élimination d'un BD donné, même s'il n'appartient pas à une catégorie de BDCE]. Pour cela, le code entrant d'emplacement EMT-ED du BD éliminé est d'abord utilisé pour identifier, dans l'unité GMC, la catégorie CAT-ED à laquelle appartient ce BD éliminé. Si ce code de catégorie CAT-ED indique qu'il s'agit de l'une des C catégories de BDCE, on retire ensuite, dans l'unité GBDCE, l'emplacement EMT-ED du BD de la liste chaînée de BDCE correspondant à la catégorie CAT-ED. Il s'agit donc de la même opération que celle décrite précédemment par référence à la figure 15 (cf. chapitre 3), en remplaçant ici le code d'emplacement EMT-S par EMT-ED, et le code de catégorie CAT-S par CAT-ED.

### 6. Elimination d'un BD candidat à l'élimination dans une catégorie donnée.

Ce type d'élimination peut être utilisé lorsque le système de gestion veut forcer la libération d'un emplacement EMT dans la mémoire tampon, en éliminant un BD candidat à l'élimination appartenant à une catégorie CAT-BEP=i donnée. Une telle opération est par exemple effectuée en prévision d'une congestion imminente pour des BD appartenant à une catégorie plus élevée que la catégorie i du BD qui est éliminé pour lui céder la place.

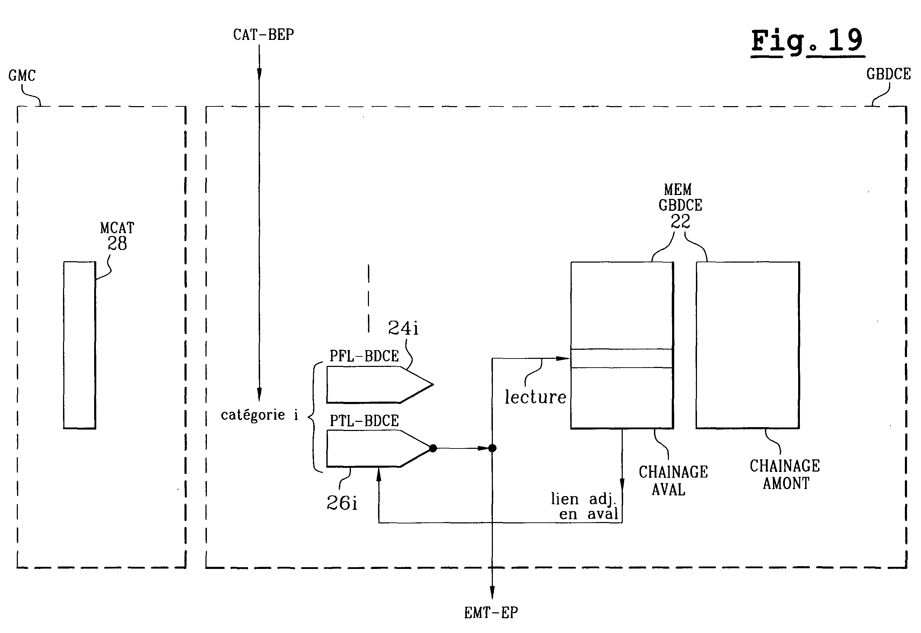

Les échanges d'informations entre les différentes unités sont représentés à la figure 18. L'élimination d'un BD candidat à l'élimination (BDCE) de catégorie CAT-BEP=i est commandée par l'unité UGT1 en activant le signal de commande sortant EBDP à l'état 1 et en fournissant le code sortant de catégorie de BD à éliminer CAT-BEP. Le code de catégorie CAT-BEP=i est transmis uniquement à l'unité GBDCE de l'ensemble GBDPC, et le signal de commande EBDP est transmis aux unités GIE, GEL, GAEI et GBDCE. On note qu'à la différence du cas précédent, l'unité UGT 1 ne désigne pas l'identité du BD qui sera éliminé, mais seulement la catégorie dans laquelle un BDCE doit être sélectionné par l'unité GBDCE elle-même parmi l'ensemble des BDCE appartenant à la catégorie CAT-BEP=i requise. Dans l'exemple où l'on utilise une méthode de gestion par liste chaînée, le BDCE sélectionné est le premier qui figure en tête de la liste de BDCE correspondant à la catégorie spécifiée par le code CAT-BEP.

Les opérations effectuées au niveau de l'unité GBDCE de l'ensemble GBDPC seront décrites par référence à la figure 18.

Le code de catégorie CAT-BEP fourni par l'unité UGT1 permet à l'unité GBDCE de sélectionner directement le couple de pointeurs 24i/26i relatif à la liste chaînée des BDCE correspondant à la catégorie CAT-BEP=i (dans le cas présent, aucune opération n'est donc effectuée dans l'unité GMC). Le code d'adresse d'emplacement EMT du BDCE sélectionné (ici désigné EMT-EP) se trouve être le premier en tête de la liste chaînée de BDCE de catégorie CAT-BEP=i, donc désigné par le pointeur tête de liste PTL-BDCE 26i qui fournit le code sortant d'emplacement EMT-EP transmis aux unités GEL et GAEI. Pour effectuer la mise à jour de la liste chaînée, ce pointeur tête de liste 26i adresse en lecture la partie chaînage aval de la mémoire 22 pour identifier le lien adjacent en aval vers l'EMT suivant de la liste, le code de cet EMT suivant étant inscrit dans le pointeur tête de liste 26i comme nouvelle adresse de premier emplacement EMT en tête de cette liste de BDCE.

Au niveau de l'unité GEL, on libère l'emplacement EMT-EP occupé par le BD sélectionné pour élimination, en ajoutant cet emplacement EMT-EP libéré à la fin de la liste chaînée des EMT libres. Cette opération est identique à celle décrite par référence à la figure 14 (cf. chapitre 3), en remplaçant ici le code d'emplacement EMT-S par EMT-EP.

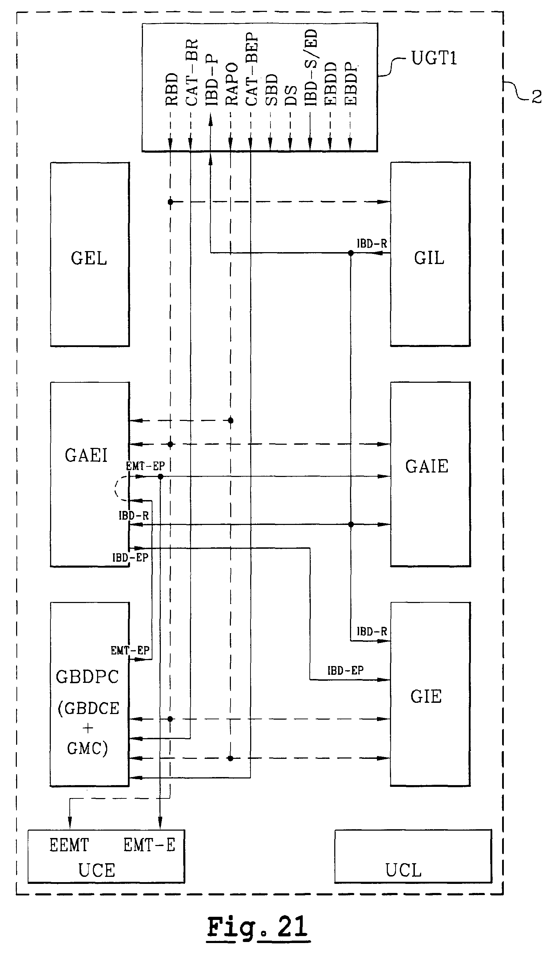

L'unité GAEI identifie l'identité IBD-EP qui est associée à l'adresse d'emplacement EMT-EP transmise par l'unité GBDCE. Comme le montre la figure 20, le code entrant d'emplacement EMT-EP adresse en lecture la mémoire de relation 14 de l'unité GAEI pour lire le code d'identité IBD-EP associée à cet emplacement EMT-EP, selon la relation EMT->IBD mémorisée auparavant lors de la réception du BD, comme décrit par référence à la figure 5 (cf. chapitre 1). Ce code sortant d'identité IBD-EP est transmis à l'unité GIE.

Dans l'unité GIE, on marque, dans l'état BDNE=0, l'indicateur d'élimination du BD désigné par son code d'identité IBD-EP, pour mémoriser le fait que ce BD sélectionné pour élimination est maintenant dans l'état éliminé. Cette opération est identique à celle décrite par référence à la figure 17, en remplaçant le code d'identité IBD-ED par IBD-EP.

### 7. Réception de BD avec substitution (pushout).

Par opposition avec une opération de réception de BD dite normale, c'est-à-dire sans substitution de BD (cf. chapitre 1), cette opération de réception de BD avec substitution consiste à enregistrer, dans la mémoire tampon, le nouveau BD reçu non pas dans un emplacement libre (EMT-R normalement fourni par l'unité GEL), mais dans un emplacement EMT libéré à cet effet (EMT-EP) en éliminant un BD candidat à l'élimination (BDCE) dans une catégorie CAT-BEP spécifiée par l'unité UGT1. L'expression substitution de BD (en anglais « push-out ») signifie que, dans la mémoire tampon, le nouveau BD reçu remplace le BD éliminé. Il s'agit donc de réaliser de façon combinée l'élimination d'un BDCE dans une catégorie donnée et la réception d'un nouveau BD reçu à la place qu'occupait le BD éliminé dans la mémoire tampon. En général, le BD éliminé est sélectionné dans une catégorie de BDCE inférieure à celle du BD reçu.

Ainsi, une telle réception d'un bloc de données avec substitution nécessite d'exécuter de façon combinée :
- d'une part une opération d'élimination de BD consécutive à la sélection préalable d'un BDCE dans une catégorie de BD requise CAT-BEP; et
- d'autre part une opération de réception proprement dite du nouveau BD.

Les échanges d'informations entre les différentes unités sont représentés sur la figure 21. Une opération de réception de BD avec substitution est caractérisée par la présence simultanée des signaux de commande RBD et RAPO tous deux actifs à l'état 1 en sortie de l'unité de gestion temporelle UGT1.

Le signal RBD=1 est transmis à toutes les unités du système de gestion, à savoir les unités GEL, GIL, GAEI, GAIE, et GIE, et aux unités GMC et GBDCE de l'ensemble GBDPC, ainsi qu'à l'entrée EEMT de l'unité de commande en écriture UCE ; le signal RAPO=1 est transmis aux unités GEL, GAEI, et GIE, et aux unités GMC et GBDCE de l'ensemble GBDPC.

Outre les signaux de commande RBD=1 et RAPO=1, l'unité UGT1 fournit les codes suivants uniquement aux unités GMC et GBDCE de l'ensemble GBDPC:
- CAT-BR, qui indique la catégorie (j) du BD en cours de réception, c'est-à-dire du BD qui viendra en substitution du BD éliminé ; et
- CAT-BEP, qui indique la catégorie (i) de BD candidat à élimination (BDCE) requise pour sélectionner un BD qui sera éliminé.

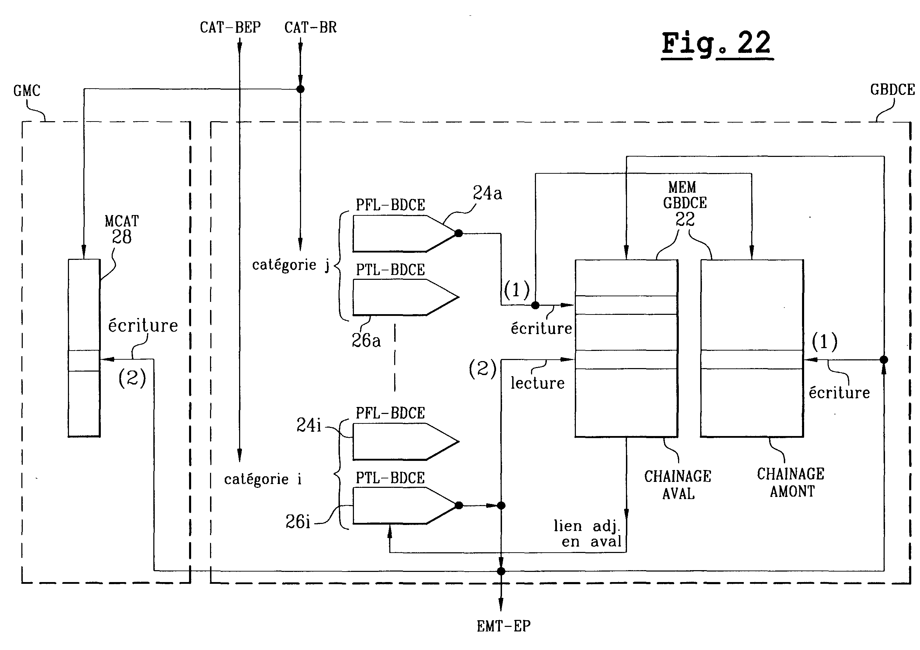

En réponse aux signaux de commande précités, les unités GMC et GBDCE de l'ensemble GBDPC effectuent une suite d'opérations qui sera décrit par référence à la figure 22.

Dans un premier temps, l'unité GBCDE sélectionne, parmi le sous-ensemble de BDCE appartenant à la catégorie CAT-BEP=i requise, le premier BDCE qui figure en tête de la liste chaînée des BDCE correspondant à cette catégorie désignée par le code CAT-BEP, comme BD sélectionné pour élimination, désigné par l'emplacement EMT-EP. Le code de catégorie CAT-BEP fourni par l'unité UGT1 permet de sélectionner directement le couple de pointeurs 24i/26i relatif à la liste chaînée des BDCE correspondant à la catégorie CAT-BEP=i. Alors le pointeur tête de liste PTL-BDCE 26i fournit le code d'adresse d'emplacement EMT-EP du BD sélectionné pour élimination, et cette liste chaînée est ensuite mise à jour comme dans le cas décrit par référence à la figure 19 (cf. chapitre 6).

Ce code d'emplacement EMT-EP est transmis vers l'unité GAEI. En réponse, l'unité GAEI identifie l'identité IBD-EP associée à l'emplacement EMT-EP du BD éliminé, en effectuant une opération identique à celle déjà décrite par référence à la figure 20.

Le code d'identité IBD-EP identifié par l'unité GAEI est transmis à l'unité GIE pour y marquer l'indicateur d'élimination de ce BD éliminé, désigné par le code d'identité IBD-EP, à l'état BDNE=0. Cette opération est la même que celle décrite précédemment par référence à la figure 17, en remplaçant le code d'identité IBD-ED de cette figure ici par IBD-EP.

L'ensemble des opérations venant d'être décrit pour le cas d'une réception de BD avec substitution concerne l'élimination préalable d'un BD destinée à céder la place au nouveau BD reçu. En fait, ces opérations sont semblables à celles déjà décrites dans le cadre d'une simple élimination de BD dans une catégorie donnée.

Ensuite, et/ou en parallèle, on effectue les opérations propres à la réception du nouveau BD reçu qui vient en substitution dans l'emplacement EMT libéré, et qui seront maintenant décrites.

Dès réception du signal RBD, l'unité GIL sélectionne une identité IBD libre pour l'affecter au nouveau BD reçu, et transmet à l'unité UGT1 cette identité (ici désignée IBD-R) associée au BD en cours de réception. Cette opération est identique à celle décrite précédemment par référence à la figure 4 (cf. section 1) et ne sera pas décrite à nouveau par souci de concision.

De même que pour le cas d'une réception normale de BD, ce code d'identité IBD-R est également transmis :
- à l'unité GAEI, pour qu'elle mémorise la relation EMT->IBD, en enregistrant ce code d'identité IBD-R dans la ligne de mémoire correspondant à l'adresse d'emplacement attribué au nouveau BD, ici l'emplacement EMT-EP qui vient d'être libéré par élimination et qui est fourni par l'unité GBDCE (pointillés dans la case GAEI de la figure 21). Cette opération est identique à celle précédemment décrite par référence à la figure 5, en remplaçant le code d'emplacement EMT-R ici par EMT-EP;
- à l'unité GAIE, pour qu'elle mémorise la relation IBD->EMT, en enregistrant le code d'emplacement EMT-EP attribué au nouveau BD, dans la ligne de mémoire correspondant à l'identité IBD-R affectée à ce BD, selon une opération identique à celle décrite par référence à la figure 6 en remplaçant le code d'emplacement EMT-R ici par EMT-EP ; et
- à l'unité GIE pour y initialiser dans l'état non éliminé (BDNE=1) l'indicateur d'élimination du nouveau BD désigné par son identité IBD-R, selon une opération identique à celle décrite par référence à la figure 8.

Sur la figure 21, le code d'emplacement EMT-EP transmis par l'unité GAEI est destiné non seulement à l'unité GAIE, mais également :
- aux unités GMC et GBDCE de l'ensemble GBDPC pour mémoriser, dans l'unité GMC, la catégorie CAT-BR=j du nouveau BD, et pour enregistrer, le cas échéant dans l'unité GBDCE, ce BD reçu dans la liste de BD candidats à élimination correspondant à sa catégorie CAT-BR ; et
- à l'unité de commande d'écriture UCE, comme adresse de l'emplacement où est inscrit le nouveau BD dans la mémoire tampon.

On peut noter qu'il est bien sûr équivalent de transmettre ce code EMT-EP à toutes ces unités concernées, directement à partir de l'unité GBDCE de l'ensemble GBDPC.

Au niveau des unités GMC et GBDCE de l'ensemble GBDPC, on effectue alors une opération (cf. figure 22) semblable à celle effectuée dans le cas d'une réception normale de BD :
- d'une part on mémorise, dans l'unité GMC, la relation EMT->catégorie, en inscrivant la catégorie CAT-BR=j du BD reçu, dans la mémoire de relation MCAT 28, à son adresse d'emplacement EMT-EP
- d'autre part, si la catégorie CAT-BR du nouveau BD correspond à l'une des C catégories de BDCE, on ajoute, dans l'unité GBDCE, ce nouveau BD comme BDCE dans la liste chaînée de BDCE de sa catégorie, en sélectionnant le pointeur fin de liste 24a de cette catégorie CAT-BR et pour ajouter le nouveau BD en fin de la liste chaînée, selon une opération identique à celle décrite par référence à la figure 7 (cf. chapitre 1).

Dans la figure 22, les opérations spécifiques relatives à l'élimination d'un BD d'une part et à la réception du nouveau BD d'autre part sont identifiées respectivement par (1) et (2).

Comme dans le cas d'une réception normale de BD, le code d'emplacement attribué au nouveau BD reçu, ici EMT-EP, est aussi fourni à l'entrée EMT-E de l'unité UCE pour y inscrire ce BD.

De nombreuses variantes sont possibles pour réaliser les différentes opérations élémentaires des chapitres 1 à 7 tout en restant dans le cadre de la présente invention. Ces variantes peuvent intervenir dans la définition et la structure des différentes informations échangées entre les unités, et/ou dans la configuration même des différentes unités.

Selon l'une de ces variantes, qui permet une économie sensible du volume de mémoire requis, il est possible de réunir autour d'une mémoire commune les fonctions des unités GEL et GAEI, et de réunir autour d'une autre mémoire commune les fonctions des unités GIL et GAIE.

En effet, on peut observer pour l'unité GEL, que, par principe, la liste chaînée des emplacements EMT libres n'occupe pas de lignes correspondant à des emplacements EMT occupés. A contrario, on peut observer que la mémoire d'association de l'unité GAEI n'est utilisée que pour les emplacements EMT occupés. De la sorte, il est possible de d'exploiter cette utilisation exclusive des emplacements EMT en ne prévoyant qu'une seule mémoire commune pour les unités GEL et GAEI, qui comporte autant de lignes que d'emplacements EMT prévus dans la mémoire tampon. Pour la fonction GEL, cette mémoire commune est associée à un couple de pointeurs pour gérer la liste chaînée des EMT libres, comme dans le cas décrit d'une unité GEL séparée.

De même, par principe, la liste chaînée des IBD libres dans la mémoire de l'unité GIL n'occupe pas de lignes qui correspondent à des identités IBD occupées. Dans ce cas, chaque ligne qui correspond à une identité IBD occupée peut être utilisée pour mémoriser l'adresse d'emplacement EMT correspondant à une identité IBD occupée.

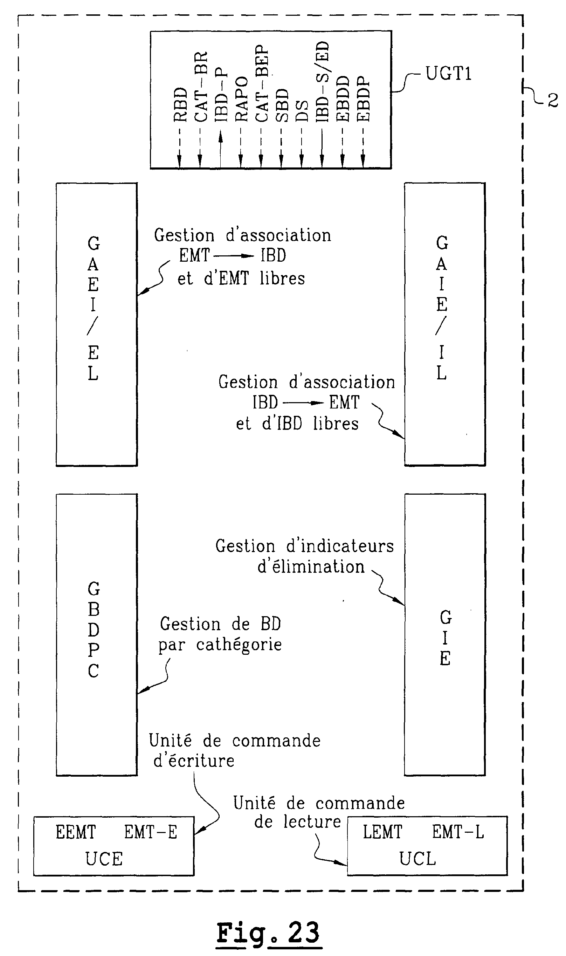

Un schéma d'ensemble du dispositif de gestion de BD correspondant à cette variante est représenté sur la figure 23. Ce schéma diffère de celui de la figure 1 essentiellement par le fait que les fonctions de gestion d'association EMT→IBD et de gestion des EMT libres sont effectuées dans une unité hybride GAEI/EL et, de manière analogue, les fonctions de gestion d'association IBD→EMT et de gestion des EBD libres sont effectuées dans une unité hybride GAIE/IL. Les tâches effectuées au sein de ces unités hybrides GAEI/EL et GAIE/IL pour réaliser les différentes opérations élémentaires sont analogues à celles effectuées par les unités séparées GEL, GAEI, GIL et GAIE. Dans chaque unité hybride, un multiplexage approprié des différentes informations permet alors de gérer les accès à leur mémoire commune pour lecture et écriture.

Comme expliqué auparavant, la présente invention permet également une variante au niveau de l'unité de gestion des BD candidats à l'élimination GBDCE, selon laquelle la mémoire unique 22 qui gère l'ensemble des listes chaînées relatives aux C catégories de BD candidats à l'élimination (BDCE), est remplacée par C mémoires. Chacune de ces C mémoires gère alors une seule liste chaînée de BDCE relative à une catégorie donnée, associée au couple de pointeurs (tête de liste et fin de liste) de cette liste à double chaînage. En fonction de la catégorie de BDCE concernée, la sélection du couple de pointeurs dans l'unité GBDCE est alors remplacée par une sélection de la mémoire appropriée avec son couple de pointeurs associé.

Dans la description, les sous-ensembles d'entités des unités GEL, GIL et GBDCE sont gérés en utilisant la technique classique des listes chaînées. On comprendra cependant que d'autres techniques de gestion de sous-ensembles d'entités peuvent être envisagées sans sortir du cadre de l'invention. A titre d'exemple, il est possible d'envisager l'utilisation de mémoires de type FIFO (premier entré, premier sorti) ou de registres de type FFO (recherche du premier).

Quelle que soit la variante retenue, comme évoqué plus haut pour les unités de gestion GMC et GBDCE de l'ensemble GBDPC, il est également possible de désigner les BD non pas par leur emplacement EMT, mais indirectement par leur identité IBD. Dans ce cas, il n'est pas nécessaire de gérer la relation EMT→IBD, et on peut donc s'affranchir de l'unité GAEI.

En comparaison avec la solution décrite pour les unités de l'ensemble GBDCE basée sur les emplacements EMT, selon une telle alternative basée sur les identités IBD, dans toutes les opérations où interviennent les unités GMC et GBDCE, on remplace alors les signaux EMT-R et EMT-EP respectivement par IBD-R et IBD-EP. Ainsi, les principales différences dans le fonctionnement du dispositif de gestion de la mémoire tampon sont brièvement décrites ci-dessous pour chacune des diverses opérations élémentaires relatives aux chapitres 1 à 7 qui précèdent.

### Réception normale de BD (sans substitution):

L'unité GBDCE reçoit directement de l'unité GIL l'identité IBD-R associée au BD reçu, pour qu'elle gère ce nouveau BD en fonction de sa catégorie.

### Service d'un bloc de données (SBD=1) sans relâchement (DS=0) :

Cette opération ne fait pas intervenir les unités GMC et GBDCE de l'ensemble GBDPC ; en conséquence, elle est strictement identique au cas analogue décrit au chapitre 2.

### Dernier service d'un bloc de données (DS=1) avec relâchement d'EMT et d'IBD :

Les unités GMC et GBDCE de l'ensemble GBDPC reçoivent l'identité IBD-S du BD servi directement de l'unité UGT1, au lieu de recevoir son code d'emplacement EMT-S de l'unité GAIE.

### Dernier service d'un bloc de données (DS=1) avec relâchement d'IBD seulement:

Comme pour le cas précédent, les unités GMC et GBDCE de l'ensemble GBDPC reçoivent l'identité IBD-S du BD servi de l'unité UGT1, au lieu de recevoir son code d'emplacement EMT-S de l'unité GAIE.

### Elimination d'un BD donné :

De même, les unités GMC et GBDCE de l'ensemble GBDPC reçoivent l'identité IBD-S du BD servi directement de l'unité UGT1, au lieu de recevoir son code d'emplacement EMT-S.

### Elimination d'un BD candidat à l'élimination de dans une catégorie donnée :

L'unité GAIE, reçoit en outre d'une part de l'unité UGT1, le signal de commande EBDP=1, et, d'autre part de l'unité GBDCE, le code d'identité IBD-EP du BDCE sélectionné pour élimination, pour qu'elle effectue l'identification de l'emplacement EMT-EP correspondant à cette identité IBD-EP et transmette ce code d'emplacement EMT-EP à l'unité GEL. En outre, c'est l'unité GBDCE qui transmet cette identité IBD-EP directement à l'unité GIE pour qu'elle marque le BD correspondant dans l'état éliminé.

### Réception de BD avec substitution (pushout) :

En ce qui concerne la phase de sélection d'un BDCE, l'unité GAIE reçoit en outre, d'une part de l'unité UGT1, le signal de commande RAPO=1, et, d'autre part de l'unité GBDCE, le code d'identité IBD-EP du BDCE sélectionné pour élimination, pour qu'elle effectue l'identification de l'emplacement EMT-EP correspondant à l'identité IBD-EP et transmette ce code d'emplacement EMT-EP à l'unité UCE ; en outre, c'est l'unité GBDCE qui transmet cette identité IBD-EP à l'unité GIE pour qu'elle marque le BD correspondant dans l'état éliminé. En ce qui concerne la phase de réception de BD, l'unité GBDCE reçoit directement de l'unité GIL l'identité IBD-R associée au nouveau BD reçu.

D'autres variantes de l'invention sont également possibles pour les applications de gestion de priorité les plus simples, où on distingue seulement n = 2 catégories de priorité de BD (haute et basse priorité), et où on prévoit seulement l'élimination possible de BD de basse priorité, auquel cas il suffit de gérer une seule catégorie de BD candidats pour élimination (C = 1), à savoir ceux de basse priorité. Dans ce cas particulier, l'unité GMC de gestion de marquage de catégorie mémorise, pour chaque BD, un code de catégorie à l'aide d'un seul bit (indiquant haute ou basse priorité), et l'unité GBDCE de gestion de BD candidats à l'élimination ne gère qu'une seule liste de BDCE (de basse priorité), par exemple au moyen d'une seule liste chaînée. En outre, on peut remarquer que, lors d'une opération impliquant l'élimination de l'un des BD de basse priorité (opération isolée ou bien lors d'une réception de BD avec substitution), l'unité UGT1 n'a plus besoin de fournir le code CAT-BEP désignant la catégorie de BDCE requise, puisqu'il s'agit toujours, dans ce cas, de celle des BD de basse priorité.

Enfin, comme dans la demande de brevet précitée, l'invention comprend également d'autres variantes lorsque chaque adresse d'emplacement EMT ne peut être associée qu'à un nombre restreint d'identités de bloc IBD. De telles variantes permettent des réalisations plus optimisées en terme de volume de mémoire requis, en tenant compte toutefois d'une certaine réduction de performance, comme expliqué plus loin.

A titre d'exemple, on peut considérer le cas simple où chaque adresse d'emplacement EMT ne peut avoir que deux valeurs d'identités IBD associées possibles, désignées IBD-A et IBD-B. Alors un codage simplifié de ces deux valeurs d'identité IBD consiste à utiliser comme base le code d'adresse EMT auquel on ajoute un bit de code d'identité (CI) caractérisant la première ou la seconde valeur d'identité IBD associée possible (CI = 0 ou 1 respectivement pour IBD-A ou IBD-B). Dans ce cas, la gestion des emplacements EMT libres et des identités IBD libres, ainsi que la gestion des relations entre EMT et IBD pour les BD présents dans la mémoire tampon, est simplifiée, en utilisant trois bits d'état par adresse EMT :
- un bit (IEMT) indiquant si l'emplacement EMT est occupé ou non par un BD ;
- un bit (IIA) indiquant si la première valeur d'identité associée IBD-A est libre ou bien utilisée pour un BD ; et
- un bit (IIB) indiquant si la seconde valeur d'identité associée IBD-B est libre ou bien utilisée pour un BD.

L'utilisation d'un nombre restreint de valeurs d'identité possibles par EMT introduit certaines restrictions sur la disponibilité de chaque emplacement EMT dans la mémoire tampon, c'est-à-dire sa capacité de recevoir un nouveau BD, dans la mesure où ceci nécessite qu'au moins l'une de ses deux valeurs d'identité associées possibles soit elle-même disponible. Cette condition est nécessaire pour qu'un emplacement EMT non occupé par un BD soit vraiment disponible, ou pour qu'un emplacement EMT occupé par un BD candidat à l'élimination soit effectivement utilisable pour effectuer une substitution de BD.

La situation où un emplacement EMT ne peut pas être rendu disponible parce que ses deux valeurs d'identité associées possibles (IBD-A et IBD-B) sont actuellement indisponibles, peut exister temporairement lorsque deux éliminations prématurées de BD ont été successivement effectuées dans ce même emplacement EMT, et qu'aucune des deux valeurs d'identité qui étaient associées à ces BD éliminés n'a été libérée entre temps. L'existence d'une telle situation peu probable, mais non impossible, a pour effet d'augmenter sensiblement la probabilité de perte de BD dans la mémoire tampon.

Pour une telle variante, par rapport à la première solution décrite du dispositif 2, des unités de gestion semblables aux unités GIE, GMC, et GBDCE sont également utilisées. Par contre, les fonctions de gestion des unités GEL, GIL, GAEI, et GAIE peuvent être optimisées, en les remplaçant par :
- une unité de gestion des emplacements EMT disponibles (GED), et
- une unité de gestion des états de disponibilité EMT/IBD (GEDEI).

L'unité GED de gestion des emplacements EMT disponibles gère en fait deux sous-ensembles distincts d'emplacements EMT disponibles (par exemple, à l'aide de deux listes chaînées dans une mémoire commune adressée par EMT), à savoir un premier sous-ensemble d'emplacements EMT disponibles ayant leurs deux identités associées (IBD-A et IBD-B) libres, et un second sous-ensemble d'emplacements EMT disponibles n'ayant qu'une seule identité associée (IBD-A ou IBD-B) libre. Une telle gestion séparée en deux sous-ensembles distincts permet, lors d'une opération de réception normale de BD, de sélectionner de préférence un EMT disponible dans le premier sous-ensemble pour un nouveau BD s'il devient candidat à l'élimination, afin que ce dernier puisse être ensuite éventuellement éliminé pour une réception de BD avec substitution (qui ne sera possible que s'il reste encore une valeur d'identité disponible pour cet EMT).

L'unité GEDEI de gestion des états de disponibilité EMT/IBD assure les fonctions des unités précédentes GIL, GAEI, et GAIE, en gérant en mémoire, pour chaque adresse EMT, les trois bits d'état IEMT, IIA, et IIB. Ainsi, dans une telle variante, la fonction de gestion des valeurs d'identité IBD-A et IBD-B libres, associées à un emplacement EMT, est simplement basée sur la valeur des bits d'état IIA et IIB correspondants, tandis que la fonction de gestion des relations entre EMT et IBD est simplifiée par le codage utilisé pour les valeurs d'identité sur la base de l'emplacement EMT correspondant.

## Revendications

1. Dispositif de gestion d'une mémoire tampon, chaque emplacement de cette mémoire étant susceptible de mémoriser un bloc de données à une adresse d'emplacement, et une référence dite d'identité de bloc de données étant associée à chaque bloc traité par ledit dispositif, ce dernier comportant:
- des moyens (UGT1) de gestion temporelle des blocs de données mémorisés dans la mémoire tampon, pour:
commander la réception d'un nouveau bloc de données à mémoriser dans la mémoire tampon;
arranger, selon une discipline de service donnée, les identités des blocs de données mémorisés dans la mémoire tampon, cet arrangement consistant à gérer, en fonction de paramètres temporels associés aux identités de ces blocs, leurs attentes respectives dans la mémoire tampon et déterminer ainsi leurs service à des instants de lecture respectifs, chaque bloc de données devant être normalement lu un nombre prédéterminé de fois avant de libérer son emplacement dans la mémoire tampon ainsi que son identité de bloc associée;
commander le service d'un bloc de données à lire dans la mémoire tampon;
et commander éventuellement l'élimination prématurée d'un bloc de données mémorisé prédéterminé, en libérant son emplacement dans la mémoire tampon tout en préservant temporairement son identité de bloc associée pour éviter un réarrangement des relations temporelles entre blocs;
- des moyens (GEL) de gestion des adresses d'emplacement libre dans la mémoire tampon, pour rechercher une adresse d'emplacement libre lors de la réception d'un nouveau bloc de données à mémoriser dans cette mémoire tampon, et pour libérer l'adresse d'un emplacement lorsqu'il n'est plus occupé par un bloc de données ;
- des moyens (GIL) de gestion des identités libres de bloc de données, pour attribuer une identité libre de bloc à chaque nouveau bloc de données mémorisé dans la mémoire tampon, et pour libérer l'identité associée à un bloc de données lorsqu'elle n'est plus utilisée pour ce bloc;
- des moyens (UCE) de commande d'écriture, pour effectuer l'écriture d'un nouveau bloc de données dans un emplacement de la mémoire tampon;
- des moyens (UCL) de commande de lecture, pour effectuer une lecture dans la mémoire tampon, lors du service d'un bloc de données;
- des moyens (GAIE) de gestion d'association d'emplacement relative à une identité de bloc, pour mémoriser, pour chaque identité associée à un bloc de données, l'adresse de l'emplacement qu'il occupe dans la mémoire tampon;
- et des moyens (GIE) de gestion d'indicateur d'élimination, pour mémoriser, pour chaque identité de bloc de données, un indicateur d'élimination indiquant le fait que le bloc correspondant a été éliminé prématurément ou non; ledit indicateur d'élimination relatif à un bloc de données étant marqué lors de l'élimination prématurée de ce bloc; et la présence ou l'absence dudit indicateur d'élimination relatif à un bloc de données étant détectée lors du service de ce bloc en vue de sa lecture dans la mémoire tampon, la lecture de ce bloc étant autorisée seulement si ledit indicateur d'élimination correspondant à cette identité de bloc indique que ce bloc n'a pas été déjà éliminé, et la libération de l'adresse de l'emplacement correspondant à ce bloc, après un nombre prédéterminé de lectures de ce bloc, étant autorisée seulement si ce bloc n'a pas été déjà éliminé;
**caractérisé:**
- **en ce que** les blocs de données mémorisés sont gérés selon plusieurs catégories, chaque bloc appartenant à une catégorie donnée;
- **en ce que** ledit dispositif comporte en outre:
-- des moyens (GMC) de gestion de marquage de catégorie, pour mémoriser l'appartenance de chaque bloc de données à une catégorie ; et
-- des moyens (GBDCE) de gestion de blocs candidats à l'élimination, pour mémoriser, pour chaque catégorie, la liste des blocs de données candidats à l'élimination appartenant à cette catégorie ;
- et en ce que, pour permettre d'effectuer en outre l'élimination d'un bloc de données qui est candidat à l'élimination parmi tous les blocs de données appartenant à une catégorie spécifiée:
-- lesdits moyens (GMC) de gestion de marquage de catégorie effectuent d'une part le marquage de la catégorie (CAT-BR) d'un bloc de données lors de la réception d'un nouveau bloc de données, et d'autre part la lecture pour identification de la catégorie (CAT-S ; CAT-ED) d'un bloc de données lors du dernier service d'un bloc de données qui n'a pas été déjà éliminé, ou bien lors de l'élimination prématurée d'un bloc de données prédéterminé;
-- et lesdits moyens (GBDCE) de gestion de blocs candidats à l'élimination d'une part ajoutent, lors de la réception d'un bloc de données, un nouveau bloc de données à la liste de blocs de données candidats à l'élimination qui correspond à la catégorie de priorité (CAT-BR) de ce nouveau bloc, et d'autre part suppriment un bloc de données de sa liste de blocs de données candidats à l'élimination :
soit lors du dernier service d'un bloc de données qui n'a pas été déjà éliminé ou bien lors de l'élimination prématurée d'un bloc de données prédéterminé, auxquels cas ce bloc est connu et sa liste correspond à la catégorie (CAT-S ; CAT-ED) identifiée pour ce bloc par lesdits moyens (GMC) de gestion de marquage de catégorie;
soit lors de l'élimination d'un bloc de données qui est candidat à l'élimination dans une catégorie de priorité (CAT-BEP) spécifiée, auquel cas lesdits moyens (GBDCE) de gestion de blocs candidats à l'élimination sélectionnent l'un des blocs de la liste correspondant à cette catégorie et indiquent alors, auxdits moyens (GIE) de gestion d'indicateur d'élimination, quel bloc a été sélectionné pour qu'ils marquent l'indicateur d'élimination mémorisant l'élimination de ce bloc.

2. Dispositif de gestion de mémoire tampon selon la revendication 1, **caractérisé :**
- **en ce que** les moyens (GBDCE) de gestion blocs de données candidats à l'élimination et les moyens (GMC) de gestion de marquage de catégorie adressent ces blocs de données par leur identité de blocs de données (IBD) ;
- et **en ce que**, lors de l'élimination d'un bloc de données qui est candidat à l'élimination dans une catégorie de priorité (CAT-BEP) spécifiée, les moyens (GBDCE) de gestion de blocs de données candidats pour élimination transmettent l'identité du bloc de données sélectionné pour élimination :
d'une part aux moyens (GAIE) de gestion d'association d'emplacement relatif à une identité de bloc, ces moyens déterminant alors l'adresse d'emplacement correspondante occupé par ce bloc de données sélectionné pour l'élimination ;
et d'autre part directement en tant qu'adresse de la mémoire desdits moyens (GIE) de gestion d'indicateur d'élimination pour qu'ils marquent l'indicateur d'élimination mémorisant l'élimination de ce bloc.

3. Dispositif de gestion de mémoire tampon selon la revendication 1, **caractérisé :**
- **en ce que** les moyens (GBDCE) de gestion de blocs de données candidats à l'élimination et les moyens (GMC) de gestion de marquage de catégorie adressent ces blocs de données par leur adresse d'emplacement dans la mémoire tampon (EMT) ;
- **en ce que** le dispositif comporte en outre des moyens additionnels (GAEI) de gestion d'association d'identité relative à un emplacement de bloc, pour mémoriser, pour chaque adresse d'emplacement (EMT) occupé par un bloc de données dans la mémoire tampon, l'identité (IBD) associée à ce bloc, cette identité étant mémorisée à l'adresse correspondant à celle de l'emplacement occupé par ce bloc dans la mémoire tampon ;
- et **en ce que**, lors de l'élimination d'un bloc de données qui est candidat à l'élimination dans une catégorie de priorité (CAT-BEP) spécifiée, les moyens (GBDCE) de gestion de blocs de données candidats pour élimination transmettent l'adresse d'emplacement (EMT-EP) du bloc de données sélectionné pour élimination auxdits moyens additionnels (GAEI) de gestion d'association d'identité relative à un emplacement de bloc, ces moyens additionnels déterminant alors l'identité correspondante (IBD-EP) du bloc de données sélectionné pour l'élimination, et fournissant alors cette identité de bloc de données en tant qu'adresse de la mémoire desdits moyens (GIE) de gestion d'indicateur d'élimination pour qu'ils marquent l'indicateur d'élimination mémorisant l'élimination de ce bloc.

4. Dispositif de gestion de mémoire tampon selon la revendication 2, **caractérisé en ce que**, pour exécuter de façon isolée l'élimination d'un bloc de données candidat pour élimination appartenant à une catégorie de blocs de données spécifiée, l'adresse d'emplacement (EMT-EP) occupé par le bloc de données sélectionné pour l'élimination, déterminée par les moyens (GAIE) de gestion d'association d'emplacement relatif à une identité de bloc, est fournie aux moyens (GEL) de gestion des adresses d'emplacement libre dans la mémoire tampon, pour qu'ils libèrent l'emplacement (EMT-EP) occupé par ce bloc dans la mémoire tampon.

5. Dispositif de gestion de mémoire tampon selon la revendication 3, **caractérisé en ce que**, pour exécuter de façon isolée l'élimination d'un bloc de données candidat pour élimination appartenant à une catégorie de blocs de données spécifiée, l'adresse d'emplacement (EMT-EP) occupé par le bloc de données sélectionné pour l'élimination, par les moyens (GBDCE) de gestion de blocs de données candidats pour élimination, est également fournie directement aux moyens (GEL) de gestion des adresses d'emplacement libre dans la mémoire tampon, pour qu'ils libèrent l'emplacement (EMT-EP) occupé par ce bloc dans la mémoire tampon.

6. Dispositif de gestion de mémoire tampon selon la revendication 1, pour exécuter une réception de nouveau bloc de données avec substitution de bloc de données, ladite réception de bloc avec substitution consistant, pour pouvoir mémoriser le nouveau bloc de données reçu, à éliminer immédiatement un bloc de données candidat pour élimination appartenant à une catégorie de blocs de données spécifiée, **caractérisé:**
- **en ce que** l'adresse d'emplacement de la mémoire tampon (EMT-EP) du bloc de données éliminé est utilisée dans ce cas comme adresse d'emplacement libre (EMT-R) pour mémoriser le nouveau bloc de données reçu dans la mémoire tampon, cette adresse (EMT-R) étant fournie :
aux moyens (UCE) de commande d'écriture, pour qu'ils effectuent l'écriture du nouveau bloc de données à cette adresse d'emplacement ;
et aux moyens (GAIE) de gestion d'association d'emplacement relatif à une identité de bloc, afin qu'ils mémorisent, pour l'identité de bloc attribuée à ce nouveau bloc de données, l'adresse de l'emplacement (EMT-R) utilisée pour mémoriser le bloc de données reçu;
- **en ce que** les moyens (GIL) de gestion des identités libres de bloc de données attribuent une identité de bloc (IBD-R) au nouveau bloc de données reçu, et fournissent cette identité :
aux moyens (UGT1) de gestion temporelle des blocs de données mémorisés dans la mémoire tampon;
aux moyens (GAIE) de gestion d'association d'emplacement relatif à une identité de bloc, afin qu'ils mémorisent, pour l'identité de bloc (IBD-R) attribuée à ce nouveau bloc de données, l'adresse de l'emplacement (EMT-R) utilisée pour mémoriser le bloc de données reçu;
et aux moyens (GIE) de gestion d'indicateur d'élimination pour qu'ils initialisent l'indicateur d'élimination du nouveau bloc reçu dans l'état non éliminé;
- **en ce que** lesdits moyens (GMC) de gestion de marquage de catégorie effectuent le marquage de la catégorie (CAT-BR) du nouveau bloc de données reçu;
- et **en ce que** lesdits moyens (GBDCE) de gestion de blocs de données candidats à l'élimination ajoutent ce nouveau bloc de données à la liste de blocs de données candidats à l'élimination qui correspond à la catégorie de priorité (CAT-BR) du nouveau bloc de données reçu.

7. Dispositif de gestion de mémoire tampon selon la revendication 6, **caractérisé en ce que** :
- les moyens (GBDCE) de gestion blocs de données candidats à l'élimination et les moyens (GMC) de gestion de marquage de catégorie adressent ces blocs de données par leur identité de blocs de données (IBD) ;
- et, lors de l'élimination d'un bloc de données qui est candidat à l'élimination dans une catégorie de priorité (CAT-BEP) spécifiée, les moyens (GBDCE) de gestion de blocs de données candidats pour élimination transmettent l'identité du bloc de données sélectionné pour élimination :
d'une part aux moyens (GAIE) de gestion d'association d'emplacement relatif à une identité de bloc, ces moyens déterminant alors l'adresse d'emplacement correspondante occupé par ce bloc de données sélectionné pour l'élimination ;
et d'autre part directement en tant qu'adresse de la mémoire desdits moyens (GIE) de gestion d'indicateur d'élimination pour qu'ils marquent l'indicateur d'élimination mémorisant l'élimination de ce bloc ;
et **en ce que**, pour exécuter ladite réception de nouveau bloc de données avec substitution,
- les moyens (GIL) de gestion des identités libres de bloc de données fournissent également l'identité (IBD-R) attribuée au bloc de données reçu:
aux moyens (GMC) de gestion de marquage de catégorie pour qu'ils marquent la catégorie (CAT-BR) du nouveau bloc de données reçu ;
et aux moyens (GBDCE) de gestion de blocs de données candidats à l'élimination pour qu'ils ajoutent ce nouveau bloc de données à la liste de blocs de données candidats à l'élimination qui correspond à la catégorie de priorité (CAT-BR) du nouveau bloc de données reçu ;
- et l'adresse d'emplacement (EMT-EP) utilisée pour mémoriser le nouveau bloc reçu est déterminée par les moyens (GAIE) de gestion d'association d'emplacement relatif à une identité de bloc, à partir de l'identité du bloc éliminé fournie par les moyens (GBDCE) de gestion de blocs de données candidats à l'élimination.

8. Dispositif de gestion de mémoire tampon selon la revendication 6, pour exécuter ladite réception de nouveau bloc de données avec substitution de bloc de données, **caractérisé en ce que** :
- les moyens (GBDCE) de gestion de blocs de données candidats à l'élimination et les moyens (GMC) de gestion de marquage de catégorie adressent ces blocs de données par leur adresse d'emplacement dans la mémoire tampon (EMT) ;
- le dispositif comporte en outre des moyens additionnels (GAEI) de gestion d'association d'identité relative à un emplacement de bloc, pour mémoriser, pour chaque adresse d'emplacement (EMT) occupé par un bloc de données dans la mémoire tampon, l'identité (IBD) associée à ce bloc, cette identité étant mémorisée à l'adresse correspondant à celle de l'emplacement occupé par ce bloc dans la mémoire tampon ;
- et lors de l'élimination d'un bloc de données qui est candidat à l'élimination dans une catégorie de priorité (CAT-BEP) spécifiée, les moyens (GBDCE) de gestion de blocs de données candidats pour élimination transmettent l'adresse d'emplacement (EMT-EP) du bloc de données sélectionné pour élimination auxdits moyens additionnels (GAEI) de gestion d'association d'identité relative à un emplacement de bloc, ces moyens additionnels déterminant alors l'identité correspondante (IBD-EP) du bloc de données sélectionné pour l'élimination, et fournissant alors cette identité de bloc de données en tant qu'adresse de la mémoire desdits moyens (GIE) de gestion d'indicateur d'élimination pour qu'ils marquent l'indicateur d'élimination mémorisant l'élimination de ce bloc ;
et **en ce que** :
- les moyens (GIL) de gestion des identités libres de bloc de données fournissent également l'identité (IBD-R), attribuée au bloc de données reçu, aux moyens additionnels (GAEI) de gestion d'association d'identité relative à un emplacement de bloc, pour qu'ils mémorisent, pour l'emplacement de mémoire tampon où est inscrit ce nouveau bloc reçu, son identité (IBD-R) associée;
- et l'adresse d'emplacement (EMT-EP) utilisée pour mémoriser le nouveau bloc reçu est sélectionnée par les moyens (GBDCE) de gestion de blocs de données candidats à l'élimination.

9. Dispositif de gestion de mémoire tampon selon la revendication 1, **caractérisé en ce que** les moyens (GIL) de gestion des identités libres de bloc de données et les moyens (GAIE) de gestion d'association d'emplacement relatif à une identité de bloc utilisent une mémoire commune comportant une ligne de mémoire par identité de bloc (IBD) de données possible, chaque ligne de mémoire commune étant utilisée de façon exclusive par l'un ou l'autre de ces deux types de moyens de gestion, et contenant:
- soit l'identité de bloc (IBD) suivante dans la liste chaînée d'identités de bloc libres, lorsque l'identité de bloc correspondant à cette ligne de mémoire commune est libre et gérée par les moyens (GIL) de gestion des identités libres de bloc de données;
- soit l'adresse de l'emplacement (EMT) de la mémoire tampon où est mémorisé un bloc de données ayant une identité de bloc (IBD) associée correspondant à cette ligne de mémoire commune, lorsque cette identité est utilisée et gérée par les moyens (GAIE) de gestion d'association d'emplacement relatif à une identité de bloc.

10. Dispositif de gestion de mémoire tampon selon la revendication 3, **caractérisé en ce que** les moyens (GEL) de gestion des adresses d'emplacement libre dans la mémoire tampon et. les moyens additionnels (GAEI) de gestion d'association d'identité relative à un emplacement de bloc utilisent une mémoire commune comportant une ligne de mémoire par adresse d'emplacement (EMT) possible dans la mémoire tampon, chaque ligne de mémoire commune étant utilisée de façon exclusive par l'un ou l'autre de ces deux types de moyens de gestion, et contenant:
- soit l'adresse d'emplacement (EMT) suivante dans la liste chaînée d'emplacements de mémoire libres, lorsque l'emplacement correspondant à cette ligne de mémoire commune est libre et géré par les moyens (GEL) de gestion des adresses d'emplacement libre dans la mémoire tampon;
- soit l'identité de bloc (IBD) associée à un bloc de données mémorisé dans la mémoire tampon à l'adresse d'emplacement (EMT) correspondant à cette ligne de mémoire commune, lorsque cet emplacement est occupé et géré par les moyens additionnels (GAEI) de gestion d'association d'identité relative à un emplacement de bloc.

11. Dispositif de gestion de mémoire tampon selon la revendication 1, **caractérisé en ce que** les moyens (GBDCE) de gestion de blocs de données candidats à l'élimination gèrent les diverses listes de blocs de données candidats à l'élimination à l'aide d'une liste chaînée par catégorie, et **en ce que** ces moyens utilisent une mémoire commune (22) comportant une ligne de mémoire par référence de bloc de données possible, chaque ligne de cette mémoire commune étant utilisée de façon exclusive par au plus une seule de ces listes par catégorie, et contenant la référence du bloc suivant, s'il existe, et la référence du bloc précédent, s'il existe, dans la liste chaînée de blocs candidats à l'élimination correspondant à cette catégorie.

12. Dispositif de gestion de mémoire tampon selon la revendication 11, **caractérisé en ce que** lesdites références de bloc de données utilisées pour adresser cette mémoire commune (22) sont des identités de bloc de données ; **et en ce que :**
- les moyens (GBDCE) de gestion blocs de données candidats à l'élimination et les moyens (GMC) de gestion de marquage de catégorie adressent ces blocs de données par leur identité de blocs de données (IBD) ;
- et lors de l'élimination d'un bloc de données qui est candidat à l'élimination dans une catégorie de priorité (CAT-BEP) spécifiée, les moyens (GBDCE) de gestion de blocs de données candidats pour élimination transmettent l'identité du bloc de données sélectionné pour élimination :
d'une part aux moyens (GAIE) de gestion d'association d'emplacement relatif à une identité de bloc, ces moyens déterminant alors l'adresse d'emplacement correspondante occupé par ce bloc de données sélectionné pour l'élimination ;
et d'autre part directement en tant qu'adresse de la mémoire desdits moyens (GIE) de gestion d'indicateur d'élimination pour qu'ils marquent l'indicateur d'élimination mémorisant l'élimination de ce bloc.

13. Dispositif de gestion de mémoire tampon selon la revendication 11, **caractérisé en ce que** lesdites références de bloc de données utilisées pour adresser cette mémoire commune (22) sont des emplacements de mémoire tampon ;
et **en ce que** :
- les moyens (GBDCE) de gestion de blocs de données candidats à l'élimination et les moyens (GMC) de gestion de marquage de catégorie adressent ces blocs de données par leur adresse d'emplacement dans la mémoire tampon (EMT) ;
- le dispositif comporte en outre des moyens additionnels (GAEI) de gestion d'association d'identité relative à un emplacement de bloc, pour mémoriser, pour chaque adresse d'emplacement (EMT) occupé par un bloc de données dans la mémoire tampon, l'identité (IBD) associée à ce bloc, cette identité étant mémorisée à l'adresse correspondant à celle de l'emplacement occupé par ce bloc dans la mémoire tampon ;
- et lors de l'élimination d'un bloc de données qui est candidat à l'élimination dans une catégorie de priorité (CAT-BEP) spécifiée, les moyens (GBDCE) de gestion de blocs de données candidats pour élimination transmettent l'adresse d'emplacement (EMT-EP) du bloc de données sélectionné pour élimination auxdits moyens additionnels (GAEI) de gestion d'association d'identité relative à un emplacement de bloc, ces moyens additionnels déterminant alors l'identité correspondante (IBD-EP) du bloc de données sélectionné pour l'élimination, et fournissant alors cette identité de bloc de données en tant qu'adresse de la mémoire desdits moyens (GIE) de gestion d'indicateur d'élimination pour qu'ils marquent l'indicateur d'élimination mémorisant l'élimination de ce bloc.

14. Dispositif de gestion de mémoire tampon selon la revendication 1, **caractérisé en ce que**, lors de l'élimination d'un bloc de données qui est candidat à l'élimination dans une catégorie (CAT-BEP) spécifiée, lesdits moyens (GBDCE) de gestion de blocs candidats à l'élimination sélectionnent le premier bloc de données de la liste de blocs candidats à l'élimination correspondant à cette catégorie spécifiée.
